# EUROPEAN PATENT APPLICATION

(11) **EP 4 629 075 A1**
(43) Date of publication of application: **08.10.2025**
(21) Application number: 23896648.5
(22) Date of filing: 23.11.2023
(51) Int. Cl.: G06F 9/50

(54) **HOT AND COLD PAGE MANAGEMENT ACCELERATION DEVICE AND METHOD, MMU, PROCESSOR, AND ELECTRONIC DEVICE**

(30) Priority: 29.11.2022 CN 202211518511
(71) Applicant: Cloud Intelligence Assets Holding (Singapore) Private Limited, Singapore 189554 (SG)
(72) Inventor: LUO, Ben, Shanghai 200120 (CN); GUO, Kaijie, Hangzhou, Zhejiang 310030 (CN)
(74) Representative: Barker Brettell LLP
(86) International application number: PCT/CN2023/133571
(87) International publication number: WO 2024/114497

(57) **Abstract**

Embodiments of this application provide a hot and cold page management acceleration device and method, an MMU, a processor, and an electronic device. **In an** embodiment of this application, a dedicated hot and cold page management acceleration device, which is interconnected between a processor and physical memory, is provided. The hot and cold page management acceleration device can provide a hot and cold page management service for at least one virtual address space corresponding to the physical memory by providing at least one hardware channel, and thus replace the processor to obtain hot and cold page related information, at least being able to replace the processor to scan a page table in the physical memory in a hardware-based manner, thereby reducing CPU resource consumption. Compared to a software-based manner, using dedicated hardware to obtain the hot and cold page related information can fully leverage the speed advantages of hardware, improving the frequency and the accuracy of obtaining the hot and cold page related information.

## Description

This application claims priority to Chinese patent application No. 202211518511.3, filed with the China National Intellectual Property Administration on November 29, 2022 and entitled "HOT AND COLD PAGE MANAGEMENT ACCELERATION DEVICE AND METHOD, MMU, PROCESSOR, AND ELECTRONIC DEVICE", which is hereby incorporated by reference in its entirety.

### TECHNICAL FIELD

This application relates to the field of memory management technologies and, in particular, to a hot and cold page management acceleration device and method, an MMU, a processor, and an electronic device.

### BACKGROUND

In recent years, in-memory computing (in-memory computing) has gained increasing attention. In-memory computing is a technology that aims to keep data in memory during computation and to reduce interactions between a processor (Central Processing Unit, CPU) and storage media or remote nodes responsible for providing data, so as to improve computational efficiency. This has led to a heightened focus on memory management.

In memory management, hot and cold page access information is one of the key pieces of information necessary for improving memory utilization. For example, in medium exchange scenarios, cold pages are swapped out to disks or other media based on the hot and cold page access information to free up memory spaces for other programs that need them more, which can improve the memory utilization. In particular, the more accurate the hot and cold page access information is, the more reasonable the medium exchange is, which is more beneficial for improving the memory utilization.

In existing technologies, the hot and cold page access information is obtained by the CPU through software. The higher the frequency of obtaining the hot and cold page access information is, the more accurate the obtained hot and cold page access information is, but meanwhile this also increases CPU overhead, significantly affecting CPU performance.

### SUMMARY

Various aspects of this application provide a hot and cold page management acceleration device and method, an MMU, a processor, and an electronic device, which replace a CPU to obtain hot and cold page related information, thereby reducing CPU resource consumption and improving the frequency and the accuracy of obtaining the hot and cold page related information.

An embodiment of this application provides a hot and cold page management acceleration device, interconnected between a processor and physical memory of an electronic device, and configured to provide a hot and cold page management service for at least one virtual address space corresponding to the physical memory; where the hot and cold page management acceleration device includes: an information processing module, at least one hardware channel, and a channel register, where at least part of the at least one hardware channel includes a first register and an internal storage medium; the first register is configured to: when a hardware channel to which the first register belongs is configured to serve a virtual address space, store a base address of a page table of the virtual address space, where the base address is used to characterize a storage address of the page table in the physical memory; the internal storage medium is configured to: when a hardware channel to which the internal storage medium belongs is configured to serve a virtual address space, store hot and cold page access information corresponding to the virtual address space; the information processing module is configured to: for any one hardware channel configured to serve a virtual address space, periodically scan a corresponding page table in the physical memory based on a base address of the page table stored in a first register of the any one hardware channel, to obtain hot and cold page access information corresponding to the virtual address space, and write the hot and cold page access information into an internal storage medium of the any one hardware channel; and each time scanning is completed, provide a channel number for which the scanning is completed to the processor through the channel register, so that the processor performs a hot and cold page processing operation based on hot and cold page access information in an internal storage medium of a hardware channel corresponding to the channel number for which scanning is completed.

An embodiment of this application provides a hot and cold page management method, applied to a hot and cold page management acceleration device interconnected between a processor and physical memory of an electronic device; where the hot and cold page management acceleration device includes at least one hardware channel and a channel register, and at least part of the at least one hardware channel includes a first register and an internal storage medium; where the method includes: for any one hardware channel configured to serve a virtual address space, periodically scanning a corresponding page table in the physical memory based on a base address of the page table stored in a first register of the any one hardware channel, to obtain hot and cold page access information corresponding to the virtual address space; writing the hot and cold page access information corresponding to the virtual address space into an internal storage medium of the any one hardware channel; and each time scanning is completed, providing a channel number for which the scanning is completed to the processor through the channel register, so that the processor performs a hot and cold page processing operation based on hot and cold page access information in an internal storage medium of a hardware channel corresponding to the channel number for which the scanning is completed.

An embodiment of this application provides a hot and cold page management method, applied to a processor in an electronic device, where the method includes: receiving a hardware interrupt triggered by a hot and cold page management acceleration device, where the hardware interrupt is triggered by the hot and cold page management acceleration device after page table scanning is completed for any one hardware channel, which is configured to serve a virtual address space, in at least one hardware channel included in the hot and cold page management acceleration device; obtaining a channel number for which the scanning is completed from a channel register of the hot and cold page management acceleration device, and obtaining hot and cold page access information and/or a hot and cold page linked list corresponding to the virtual address space from an internal storage medium of the any one hardware channel based on the channel number for which the scanning is completed; performing a hot and cold page processing operation based on the hot and cold page access information and/or the hot and cold page linked list.

An embodiment of this application provides a memory management unit, including the hot and cold page management acceleration device provided in the embodiments of this application.

An embodiment of this application provides a processor, including the memory management unit provided in the embodiments of this application, where the memory management unit includes the hot and cold page management acceleration device provided in the embodiments of this application.

An embodiment of this application provides an electronic device, including a processor, physical memory, and the hot and cold page management acceleration device provided in the embodiments of this application; or including physical memory and the processor provided in the embodiments of this application, where the processor includes the memory management unit provided in the embodiments of this application, and the memory management unit includes the hot and cold page management acceleration device provided in the embodiments of this application.

An embodiment of this application provides a computer-readable storage medium storing a computer program, and when the computer program is executed by a processor, the processor is caused to be able to implement steps in the hot and cold page management method provided in the embodiments of this application.

In the embodiments of this application, the dedicated hot and cold page management acceleration device, which is interconnected between the processor and the physical memory, is provided. The hot and cold page management acceleration device can provide a hot and cold page management service for at least one virtual address space corresponding to the physical memory by providing at least one hardware channel, and thus replace the processor to obtain hot and cold page related information, for example, at least being able to replace the processor to scan a page table in the physical memory in a hardware-based manner, thereby reducing CPU resource consumption. Compared to obtaining the hot and cold page related information in a software-based manner, using dedicated hardware to obtain the hot and cold page related information can fully leverage the speed advantages of hardware, improving the frequency and the accuracy of obtaining the hot and cold page related information.

### BRIEF DESCRIPTION OF DRAWINGS

The drawings described here are provided to further understand this application and constitute a part of this application. The schematic embodiments and descriptions thereof are used to explain this application and do not constitute an improper limitation of this application. In the drawings:
FIG. 1 is a schematic diagram of an internal structure of an electronic device in an embodiment of this application;
FIG. 2 is a schematic diagram of a mapping relationship between a virtual address space and a physical memory space according to an embodiment of this application;
FIG. 3a is a schematic structural diagram of a hot and cold page management acceleration device according to an embodiment of this application;
FIG. 3b is a schematic flowchart of a hot and cold page management method according to an embodiment of this application;
FIG. 4a is a schematic structural diagram of another hot and cold page management acceleration device according to an embodiment of this application;
FIG. 4b is a schematic flowchart of another hot and cold page management method according to an embodiment of this application;
FIG. 5a is a schematic structural diagram of still another hot and cold page management acceleration device according to an embodiment of this application;
FIG. 5b is a schematic flowchart of still another hot and cold page management method according to an embodiment of this application;
FIG. 6a is a schematic structural diagram of an information processing module implemented purely in hardware according to an embodiment of this application;
FIG. 6b is a schematic structural diagram of an information processing module implemented in a combination of hardware and software according to an embodiment of this application;
FIG. 6c is a schematic diagram of an internal structure of another electronic device according to an embodiment of this application;
FIG. 6d is a schematic structural diagram of still another hot and cold page management acceleration device according to an embodiment of this application;
FIG. 7a is a schematic flowchart of a hot and cold page management method described from a perspective of a hot and cold page management acceleration device according to an embodiment of this application;
FIG. 7b is a schematic flowchart of a hot and cold page management method described from a perspective of a processor according to an embodiment of this application.

### DESCRIPTION OF EMBODIMENTS

To make the objectives, technical solutions, and advantages of this application clearer, the following describes the technical solutions of this application in detail with reference to specific embodiments and corresponding accompanying drawings. Obviously, the described embodiments are only part of the embodiments of this application, not all of them. Based on the embodiments in this application, all other embodiments obtained by those of ordinary skill in the art without creative efforts shall fall within the protection scope of this application.

In memory management, hot and cold page access information is one of the key pieces of information necessary for improving memory utilization. The hot and cold page access information is obtained by scanning a page table (pagetable) by a CPU through software. The higher the frequency of scanning a page table is, the more accurate the hot and cold page access information is, but meanwhile this also increases CPU overhead, significantly affecting CPU performance. Therefore, currently, the frequency of obtaining the hot and cold page access information cannot be too high, resulting in low accuracy of the hot and cold page access information.

In view of the above technical problem, an embodiment of this application provides a dedicated hot and cold page management acceleration device, which can be applied to any electronic device, and specifically interconnected between a processor and physical memory of the electronic device. The hot and cold page management acceleration device can provide a hot and cold page management service for at least one virtual address space corresponding to the physical memory by providing at least one hardware channel, and thus replace the processor to obtain hot and cold page related information, e.g., at least being able to replace the processor to scan a page table in the physical memory in a hardware-based manner, thereby reducing CPU resource consumption. Additionally, compared to a software-based manner, using dedicated hardware to obtain the hot and cold page related information can fully leverage the speed advantages of hardware, improving the frequency and the accuracy of obtaining the hot and cold page related information.

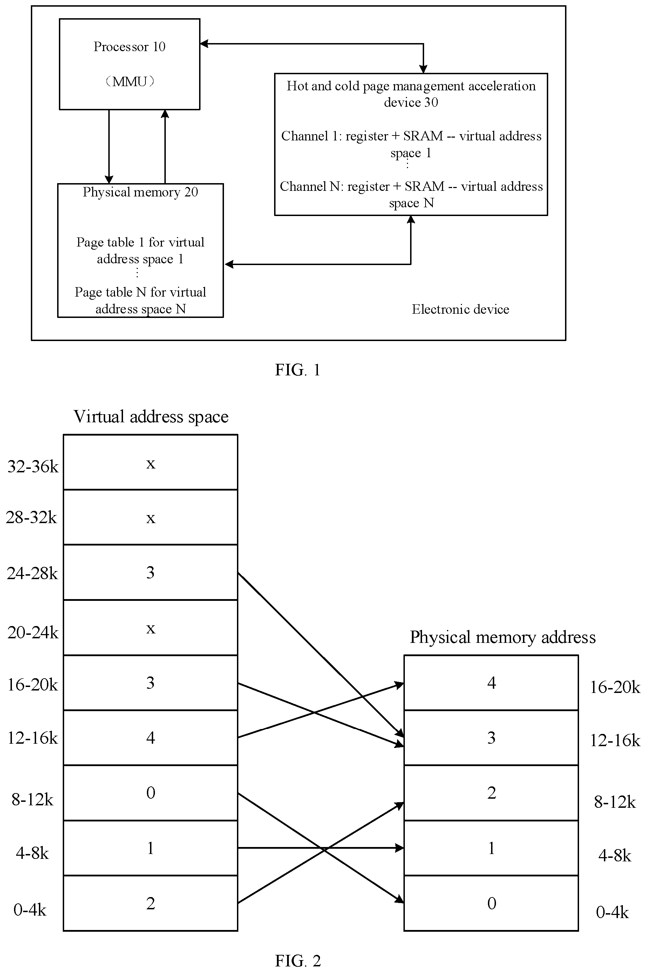

FIG. 1 is a schematic structural diagram of an electronic device according to an embodiment of this application. As shown in FIG. 1, the electronic device includes a CPU 10, physical memory 20, and a hot and cold page management acceleration device 30 interconnected between the CPU 10 and the physical memory 20. Optionally, the hot and cold page management acceleration device 30 is interconnected with the CPU 10 through a Peripheral Component Interconnect (Peripheral Component Interconnect, PCI) bus or a PCIe (peripheral component interconnect express) bus, and interconnected with the physical memory 20 through a memory bus.

In the embodiment of this application, the product form of the electronic device is not limited. For example, the electronic device may be various electronic devices with the CPU 10 and the physical memory 20, such as a smartphone, a laptop, a desktop computer, a tablet computer, a smart bracelet, a smart watch, a smart home appliance, a conventional server, a cloud server, a server cluster, etc. In addition to the CPU 10 and the physical memory 20, the electronic device may further include a communication component, a power component, a display screen, an audio component, and so on. Here, the display screen and the audio component are optional components, depending on the specific product form of the electronic device.

The electronic device of this embodiment in this application uses virtual memory technology for memory management. Each application program may be allocated with its own virtual address space, and the size of the virtual address space may be smaller, equal to, or larger than an actual space in the physical memory 20. When using the virtual memory technology for memory management, a technique called paging (paging) is used to divide a virtual address space into pages (pages), and a corresponding space in the physical memory 20 is divided into physical storage units of the same size as the pages. For example, a physical storage unit may be referred to as a page frame or a physical block, which depends on a specific operating system and is not limited here. FIG. 2 exemplarily shows a mapping relationship between a virtual address space and a space in the physical memory 20. In FIG. 2, illustration is given with a virtual address space of 36k and a physical memory space of 20k. The physical memory space includes a total of 5 physical storage units, namely physical storage units 0-4, and the size of each physical storage unit and the size of each page are both 4k. Here, page 0 is mapped to physical storage unit 2, page 1 is mapped to physical storage unit 1, page 3 is mapped to physical storage unit 0, page 4 is mapped to physical storage unit 4, and pages 5 and 7 are both mapped to physical storage unit 3. Other pages are temporarily not mapped to any physical storage unit, represented with "x" in FIG. 2.

In this embodiment, a mapping relationship between each virtual address space and a space in the physical memory 20 is maintained through a mapping record table (referred to as a page table for short). The page table includes at least one page table entry, and each page table entry stores an address mapping relationship between a page and its corresponding physical storage unit (e.g., a page frame or a physical block). For example, each page table entry stores a page number and a corresponding physical storage unit number. The page table is stored in the physical memory 20, and the page table has a base address, which is used to characterize a starting storage address of the page table in the physical memory 20. As shown in FIG. 1, the physical memory 20 stores page tables corresponding to respective virtual address spaces 1-N, namely page tables 1-N. Here, N is an integer greater than or equal to 1.

In a process of the CPU 10 running an application program or its process, when the CPU needs to access a virtual memory address, the CPU completes a mapping from a virtual address to a physical address through a page table, and then performs actual access to the mapped physical address. As shown in FIG. 1, the CPU 10 includes a Memory Management Unit (Memory Management Unit, MMU), and the process of accessing memory through the page table is mainly handled by the MMU. The detailed process is as follows.

When the CPU 10 needs to access a certain virtual address, the MMU first queries a page table to see if the page to which the virtual address belongs has been mapped to a physical storage unit, and whether the mapping relationship between the page and the physical storage unit already exists in the page table. If it exists, the virtual address is mapped to the corresponding physical address based on the address mapping relationship between the page to which the virtual address belongs and the physical storage unit to which the page is mapped, and then the physical memory 20 is accessed based on the physical address. Based on the mapping relationship shown in FIG. 2, assuming that the CPU 10 needs to access virtual address 0, which falls within the address range of page 0 (the address range of the page 0 is 0 to 4095), it can be seen from FIG. 2 that the page 0 corresponds (is mapped) to physical storage unit 2 (the address range of the physical storage unit 2 is 8192 to 12287). Therefore, the CPU 10 converts the virtual address 0 to the physical address 8192, and sends the address 8192 to a memory address bus to access the physical memory 20. The physical memory 20 is unaware of the aforementioned mapping from the virtual address to the physical address, and will only receive a read request for the address 8192 and execute it.

If the above mapping relationship between the page and the physical storage unit does not exist in the page table, it means that the page to which the virtual memory address belongs has not been loaded into the physical memory 20, indicating that a page access error has occurred. In this case, a demand paging mechanism may be initiated, that is, the CPU 10 calls a corresponding system operation function to determine whether the virtual address is a valid address. If the virtual address requested to access is a valid address, indicating a successful demand paging, a page that the virtual address points to is read into a free physical storage unit in the physical memory 20, and a page table entry is added to the page table to store the address mapping relationship between this page and the physical storage unit. After that, the CPU 10 resumes running from where the page error occurred. If the virtual address requested to access is an invalid address, it means that the CPU 10 is trying to access a non-existent virtual address, indicating a demand paging failure, and this access operation will be terminated.

In the case of the above successful demand paging, a situation of no free page frame in the physical memory 20 may occur. In this case, a medium exchange mechanism may be triggered, that is, a page with lower access hotness is moved out of the physical storage unit that it occupies based on the hot and cold degree of page access, so that this physical storage unit can load a new page, improving the utilization of the space of the physical memory 20. Here, the moved-out page is handled in two ways: if such page has not been modified, it may be directly deleted; if such page has been modified previously, it may be written into an external storage medium, such as a disk. Here, the hot and cold degree of page access may be obtained through hot and cold page access information. The hot and cold page access information refers to access information for pages in a virtual address space. Based on the access information of these pages, it can be obtained, by statistics, which pages in the virtual address space are frequently accessed and which are not, thereby obtaining the hot and cold degree of page access.

In medium exchange scenarios, if the accuracy of the hot and cold page access information is relatively low, it may happen that a page is just swapped out of the physical memory 20, and soon swapped back in the physical memory 20 because it is accessed again. Therefore, the accuracy of the hot and cold page access information directly affects the rationality and the precision of the medium exchange, helping to avoid frequent swapping in and out of pages, thereby improving the utilization of the space of the physical memory 20 and I/O performance.

It should be noted that the hot and cold page access information not only plays important roles in medium exchange scenarios, but also plays crucial roles in some software performance optimization scenarios. For example, memory resource expansion/release, or memory distribution adjustment, or the like may be performed for application programs based on the hot and cold page access information, to improve the performance of the application programs.

In the embodiment of this application, to improve the frequency and the accuracy of obtaining the hot and cold page access information, a dedicated hot and cold page management acceleration device 30 is provided. The hot and cold page management acceleration device 30 is interconnected between the CPU 10 and physical memory 20 and is used to provide a hot and cold page management service for at least one virtual address space corresponding to the physical memory 20. As shown in FIG. 1, the hot and cold page management acceleration device 30 includes N hardware channels, used to provide hot and cold page management services for N virtual address spaces respectively, where N is an integer greater than or equal to 1. Here, each application program (or process) corresponds to one virtual address space. Here, the hot and cold page management service refers to a service process of providing hot and cold page related information for a virtual address space or an application program (or process) corresponding to the virtual address space, including at least a service process of periodically scanning a page table to obtain hot and cold page access information.

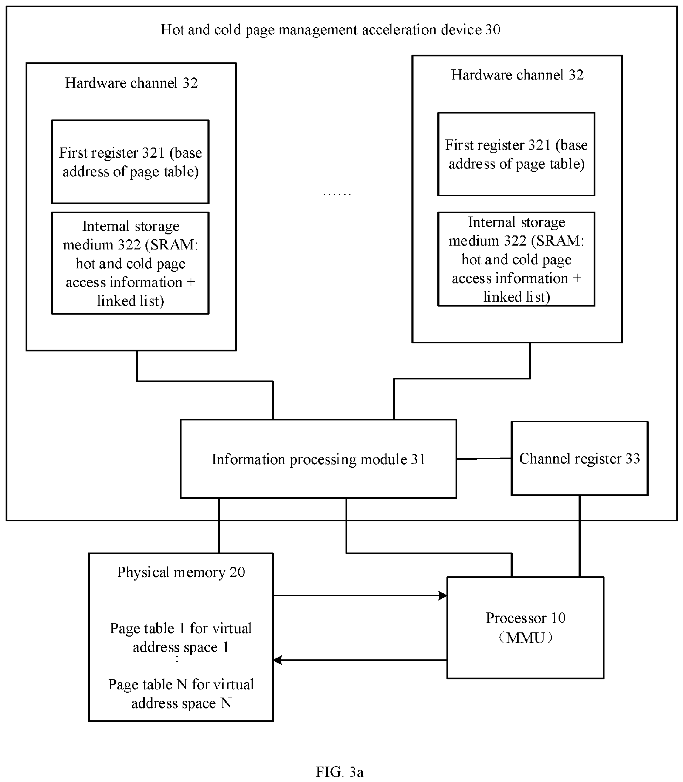

Optionally, as shown in FIG. 3a, an implementation structure of the hot and cold page management acceleration device 30 includes: an information processing module 31, at least one hardware channel 32, and a channel register 33. Here, each hardware channel 32 has a same implementation structure, and may be configured to provide a hot and cold page management service for one virtual address space. It should be noted that the same hardware channel 32 may provide a hot and cold page management service for one virtual address space at the same one time, and may provide hot and cold page management services for different virtual address spaces at different times. That is, the service relationship between the hardware channel 32 and the virtual address space may be configured as needed, meanwhile the service relationship may also be terminated as the hot and cold page management service ends.

Further, as shown in FIG. 3a, each hardware channel 32 includes at least: a first register 321 and an internal storage medium 322. Here, the internal storage medium 322 may be, but is not limited to, various volatile storage media such as a Static Random Access Memory (SRAM). Using volatile storage media helps improve read and write speed. For any one hardware channel 32, when the hardware channel 32 is configured to serve one virtual address space, the first register 321 of the hardware channel 32 is used to store a base address of a page table of the virtual address space served by the hardware channel 32; correspondingly, the internal storage medium 322 of the hardware channel 32 is used to store hot and cold page access information corresponding to the virtual address space served by the hardware channel 32.

Optionally, for any one hardware channel 32, when the hardware channel 32 is configured to serve one virtual address space, before using the hardware channel 32 to provide the hot and cold page management service for the corresponding virtual address space, an initialization operation may be performed on the hardware channel 32 to complete a configuration of related information. For example, the base address of the page table may be written into the first register 321 during the initialization process of the hot and cold page management acceleration device 30. Unlike the base address of the page table, the hot and cold page access information in the internal storage medium 322 is obtained and written into the internal storage medium 322 by the information processing module 31.

The information processing module 31 is interconnected with the respective hardware channels 32, the physical memory 20, the CPU 10, and the channel register 33. The information processing module 31 is configured to: for any one hardware channel 32 configured to serve a virtual address space, periodically scan a corresponding page table in the physical memory 20 based on the base address of the page table stored in the first register 321 of the any one hardware channel 32, to periodically obtain the hot and cold page access information corresponding to the virtual address space served by the hardware channel 32, and write the hot and cold page access information into the internal storage medium 322 of the any one hardware channel 32. As the periodic scanning operations proceed, the hot and cold page access information in the internal storage medium 322 will be periodically updated.

In the embodiment of this application, in addition to recording, fields of access information corresponding to the virtual pages are further recorded in the page table. The access information of the virtual pages is obtained based on these fields, and then statistics of hotness and coldness are performed on the virtual pages. The page table is an entrance from a virtual address space to a space in the physical memory 20. The page table not only maintains address mapping relationships between pages and physical storage units, but also have some access control fields set in page table entries of the page table. These access control fields include, but are not limited to: a field indicating an operation allowed on a corresponding page (such as read-only or read/write), a field indicating whether a corresponding page has been accessed (Access, referred to as A for short), and a field indicating whether a corresponding page has been written to (Dirty, referred to as D for short). For the A field: a default value is 0. After the page is accessed (including being read or written), the A field will be set to 1. After the A field is set to 1, software is allowed to reset it to 0. For the D field: a default value is 0. After a write operation is performed on the page, hardware sets the D field to 1, indicating that the page is newer than pages in the external storage medium. When the page needs to be moved out due to insufficient physical memory 20, the page first needs to be stored into the external storage medium, and then the D field is reset to 0 by software. For ease of description, the A field and the D field are collectively referred to as AD field. Optionally, the AD field occupies two bits (bits), but is not limited to this.

Based on the AD field in the page table, the information processing module 31 may periodically scan the page table based on the base address of the page table, and perform statistics on the hot and cold page access information corresponding to the virtual address space within each scanning period based on the AD field in the page table. The hot and cold page access information within each scanning period includes address information of pages in the virtual address space that have been accessed during this scanning period. Here, the "pages that have been accessed" include both pages on which read operations have been performed and pages on which write operations have been performed.

In the embodiment of this application, the manner of recording the hot and cold page access information is not limited. Optionally, positions of all accessed pages in the corresponding virtual address space that are obtained after one-time full page table scanning may be recorded in the form of a bitmap (bitmap). The size of the bitmap is the same as the number of pages contained in the virtual address space. In the bitmap, for an accessed page, its corresponding bit is set to a specified value (such as "1" or "0") to indicate that the page has been accessed. Further optionally, there may be two bitmaps, saving positions of pages corresponding to A fields with a value of 1 and positions of pages corresponding to D fields with a value of 1, respectively.

In addition to scanning the page table and performing statistics on the hot and cold page access information for each hardware channel 32 configured to serve the virtual address space, the information processing module 31 is further configured to: after each scanning is completed, provide a channel number for which the scanning is completed to the CPU 10 through the channel register 33, so that the CPU 10 performs a hot and cold page processing operation based on the hot and cold page access information in the internal storage medium 322 of the hardware channel 32 corresponding to the channel number for which the scanning is completed. In this embodiment, the channel register 33 is used to assist the information processing module 31 in providing the channel number for which the scanning is completed to the CPU 10, so that the CPU 10 performs the hot and cold page processing operation based on the hot and cold page access information in the internal storage medium 322 of the hardware channel 32 for which the scanning is completed.

Further optionally, in addition to replacing the CPU 10 to complete page table scanning and perform statistics on hot and cold page access information, the information processing module 31 may further maintain and update a hot and cold page linked list based on the hot and cold page access information obtained by scanning. Specifically, the information processing module 31 is further configured to: for any one hardware channel 32 configured to serve a virtual address space, generate a hot and cold page linked list corresponding to the virtual address space based on the hot and cold page access information in the internal storage medium 322 of the any one hardware channel 32, and write it into the internal storage medium 322 of the any one hardware channel 32. In this optional embodiment, in the case that the information processing module 31 provides the channel number for which the scanning is completed to the CPU 10 through the channel register 33 after each scanning is completed, the CPU 10 may perform a hot and cold page processing operation based on the hot and cold page access information and/or the hot and cold page linked list in the internal storage medium 322 of the hardware channel 32 corresponding to the channel number for which the scanning is completed.

Here, the hot and cold page linked list refers to a data structure responsible for organizing and managing pages based on their access hotness. The linked list includes multiple page nodes, where each page node corresponds to a page in a virtual address space, and each page node at least stores address information of its corresponding page (such as a page number). Here, the access hotness of a page is not only related to the frequency of the access to the page, but also related to a page swapping algorithm used in a medium exchange scenario. Optionally, the page swapping algorithm may be, but is not limited to: a Least Recently Used (Least Recently Used, LRU) algorithm, a Least Frequently Used (Least Frequently Used, LFU) algorithm, or a Not Recently Used (Not Recently Used, NRU) algorithm. If the LRU algorithm is used, the hot and cold page linked list can be called an LRU linked list; if the LFU algorithm is used, the hot and cold page linked list can be called an LFU linked list; if the NRU algorithm is used, the hot and cold page linked list can be called an NRU linked list. Correspondingly, the order of page nodes in the hot and cold page linked list is also maintained and updated in accordance with the principle of the corresponding algorithm. Taking the LRU linked list as an example, the page node that has been least recently used is placed at the end of the LRU linked list, while page nodes that have been frequently used recently are placed at the head of the LRU linked list or near the head of the LRU linked list.

In the embodiment of this application, the storage manners of the hot and cold page access information and the hot and cold page linked list in the internal storage medium 322 are not limited. In an optional embodiment, the above internal storage medium 322 may be divided into a first storage area and a second storage area. The first storage area is used to store the hot and cold page access information, and the second storage area is used to store the hot and cold page linked list. Or, in another optional embodiment, each hardware channel 32 contains two internal storage media, namely a first internal storage medium and a second internal storage medium, respectively. The first internal storage medium is used to store the hot and cold page access information, and the second internal storage medium is used to store the hot and cold page linked list.

The internal structure of the hot and cold page management acceleration device 30 shown in FIG. 3a and the functions of the modules have been introduced above. The working principle of the hot and cold page management acceleration device 30 shown in FIG. 3a will be described below.

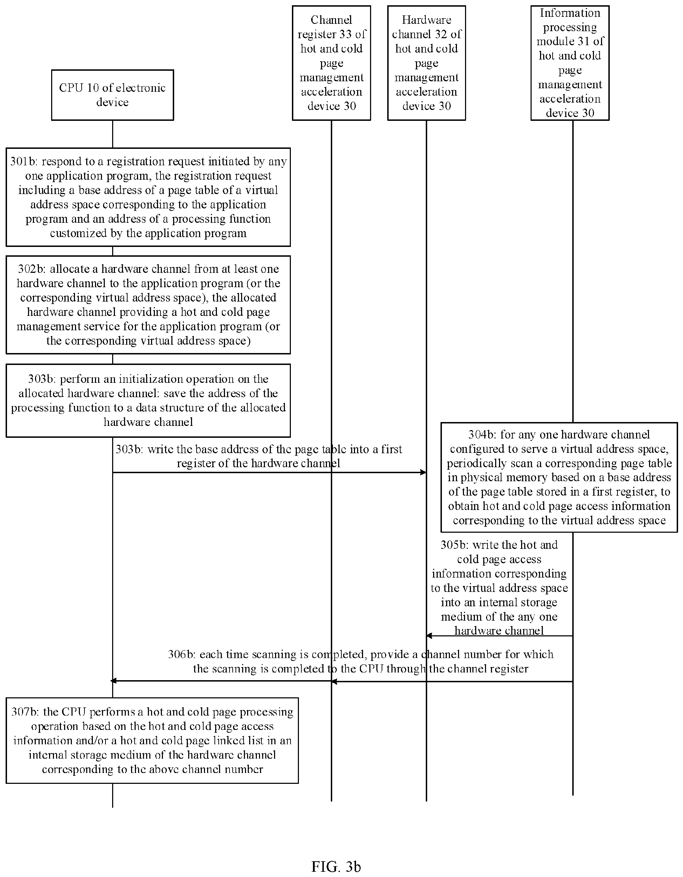

Here, the hot and cold page management acceleration device 30 shown in FIG. 3a is equipped with a driver, which may be installed on the electronic device. The driver records a channel number of at least one hardware channel 32 and provides, for application programs on the electronic device, an Application Programming Interface (Application Program Interface, API) for registration. Before using the hot and cold page management acceleration device 30 shown in FIG. 3a, the CPU 10 of the electronic device executes the driver of the hot and cold page management acceleration device 30, and registration of application programs, allocation of the hardware channels 32, and initialization of the hardware channels 32 can be completed. After that, the hardware channels 32 may provide hot and cold page management services for virtual address spaces corresponding to the registered application programs. As shown in FIG. 3b, a hot and cold page management method applied to the hot and cold page management acceleration device 30 shown in FIG. 3a includes the following.

The first stage: the CPU 10 of the electronic device executes the driver of the hot and cold page management acceleration device 30 to perform the registration of application programs, the allocation of the hardware channels 32, and initialization operations of the hardware channels 32, including the following steps 301b-303b.

301b: respond to a registration request initiated by any one application program on the electronic device through the registration API in the driver of the hot and cold page management acceleration device, the registration request including the base address of the page table of the virtual address space corresponding to the application program and an address of a processing function customized by the application program.

It should be noted that the application program may customize a required processing function and perform registration, but no limitation is imposed thereto. That is, customizing a processing function and performing registration is an optional operation. If the application program does not customize a required processing function, the CPU 10 may only perform the default hot and cold page processing operation. For ease of distinction, a processing operation that is defined by a processing function and related to hot and cold page access information is called a customized hot and cold page processing operation.

302b: allocate a hardware channel from at least one hardware channel to the application program (or the virtual address space corresponding to the application program) that initiates the registration request, the allocated hardware channel providing a hot and cold page management service for the application program (or the virtual address space corresponding to the application program).

Optionally, one hardware channel 32 may be randomly allocated from idle hardware channels 32 to the application program (or the virtual address space corresponding to the application program) that initiated the registration request; or, based on channel numbers of the hardware channels 32, one hardware channel 32 with the smallest or largest channel number may be selected from idle hardware channels 32 and allocated to the application program (or the virtual address space corresponding to the application program) that initiated the registration request; or, based on usage frequencies of the hardware channels 32, one hardware channel 32 with the lowest usage frequency may be selected from idle hardware channels 32 and allocated to the application program (or the virtual address space corresponding to the application program) that initiated the registration request.

303b: perform an initialization operation on the allocated hardware channel, that is, write the base address of the page table corresponding to the virtual address space into the first register of the allocated hardware channel, and save the address of the processing function to the data structure of the allocated hardware channel.

The second stage: the information processing module 31 in the hot and cold page management acceleration device 30 cooperates with the hardware channels 32 configured to serve the virtual address spaces to provide hot and cold page services, including the following steps 304b-306b.

304b: for any one hardware channel configured to serve a virtual address space, periodically scan the corresponding page table in the physical memory based on the base address of the page table stored in the first register of the any one hardware channel, to obtain the hot and cold page access information corresponding to the virtual address space.

It should be noted that this embodiment of the present application does not limit the scanning period used by the information processing module 31 to scan the page table, which may be a default scanning period or a scanning period pre-configured for each hardware channel 32.

305b: write the hot and cold page access information corresponding to the virtual address space into the internal storage medium of the any one hardware channel; and generate a hot and cold page linked list corresponding to the virtual address space based on the hot and cold page access information, and write the hot and cold page linked list into the internal storage medium of the any one hardware channel.

It should be noted that during the page table scanning process, it may be that whenever page information of a page that has been accessed is obtained by scanning, the information processing module 31 writes the page information (the page information is a piece of page access information in the hot and cold page access information) into the internal storage medium 322, or it may be that the information processing module 31 writes all page information (obtained by scanning) of pages that have been accessed (that is, the hot and cold page access information) into the internal storage medium 322 at one time after scanning the full page table. Correspondingly, when generating the hot and cold page linked list corresponding to the virtual address space, it may be that the order of page nodes in the current hot and cold page linked list is adjusted each time the page information of a page that has been accessed is obtained by scanning, and an adjusted hot and cold page linked list is obtained through multiple adjustment operations; or, it may be that after scanning the full page table, the order of page nodes in the current hot and cold page linked list is uniformly adjusted based on the complete hot and cold page access information, to obtain an adjusted hot and cold page linked list.

306b: each time scanning is completed, provide a channel number for which the scanning is completed to the CPU through the channel register, so that the CPU performs a hot and cold page processing operation based on the hot and cold page access information and/or the hot and cold page linked list in the internal storage medium of the any one hardware channel.

The third stage: the CPU 10 performs the hot and cold page processing operation based on the hot and cold page access information and/or the hot and cold page linked list, including the following step 307b.

307b: the CPU performs the hot and cold page processing operation based on the hot and cold page access information and/or the hot and cold page linked list in the internal storage medium of the hardware channel corresponding to the above channel number, the hot and cold page processing operation including a default hot and cold page processing operation and/or a customized hot and cold page processing operation defined by the processing function.

In the embodiment of this application, the hot and cold page processing operation performed by the CPU 10 is not limited. Any processing operation related to the hot and cold page access information may be used as a hot and cold page processing operation in the embodiment of this application. The hot and cold page processing operation in the embodiment of this application includes, but is not limited to: a default hot and cold page processing operation, and/or a customized hot and cold page processing operation, that is, a processing operation that is defined by the processing function mentioned above and related to the hot and cold page access information.

Optionally, the default hot and cold page processing operation includes, but is not limited to: flushing Translation Lookaside Buffers (Translation Lookaside Buffers, TLBs) corresponding to the virtual address spaces. The TLB is a cache (cache) between the CPU 10 and the physical memory 20, and is used to store recently-accessed page table entries in a page table, which can reduce the number of accesses to the physical memory 20 by the CPU 10. In addition, because the TLB is closer to the CPU 10, its access speed is faster, which can improve the speed of the CPU querying a page table entry.

Optionally, the processing function is used to define a processing operation related to hot and cold page access information, including but not limited to at least one of the following: performing a page replacement operation on a page node at the end of a hot and cold page linked list; changing the cache size of a corresponding application program based on hot and cold page access information, which may be, for example, increasing or decreasing a cache; releasing part of the memory space occupied by a corresponding application program based on hot and cold page access information; applying for an increase of memory space for a corresponding application program based on hot and cold page access information; and changing memory distribution of a corresponding application program based on hot and cold page access information, e.g., releasing and re-applying for memory, or making pages with similar access hotness be at adjacent locations by swapping.

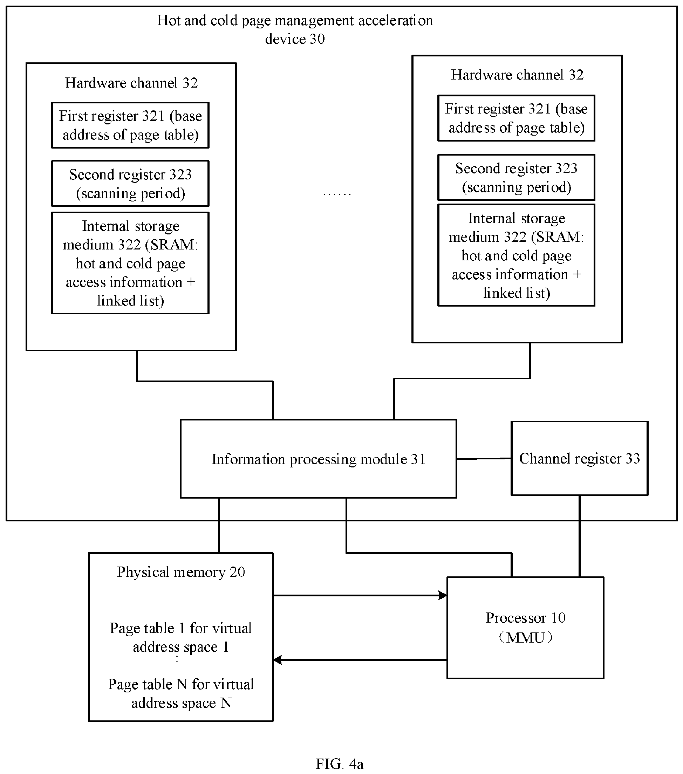

Further, on the basis of the structure of the hot and cold page management acceleration device 30 shown in FIG. 3a, as shown in FIG. 4a, each hardware channel 32 further includes: a second register 323. For any one hardware channel 32, when the hardware channel 32 is configured to serve a virtual address space, the second register 323 is used to store a scanning period corresponding to the virtual address space served by the hardware channel 32 (may be referred to as a scanning period used for a hardware channel 32 for short). For different application programs or their corresponding virtual address spaces, the scanning periods used may be the same or different. Similar to the base address of the page table, the scanning period used for each hardware channel 32 may be written into the second register 323 during the initialization process of the hot and cold page management acceleration device 30.

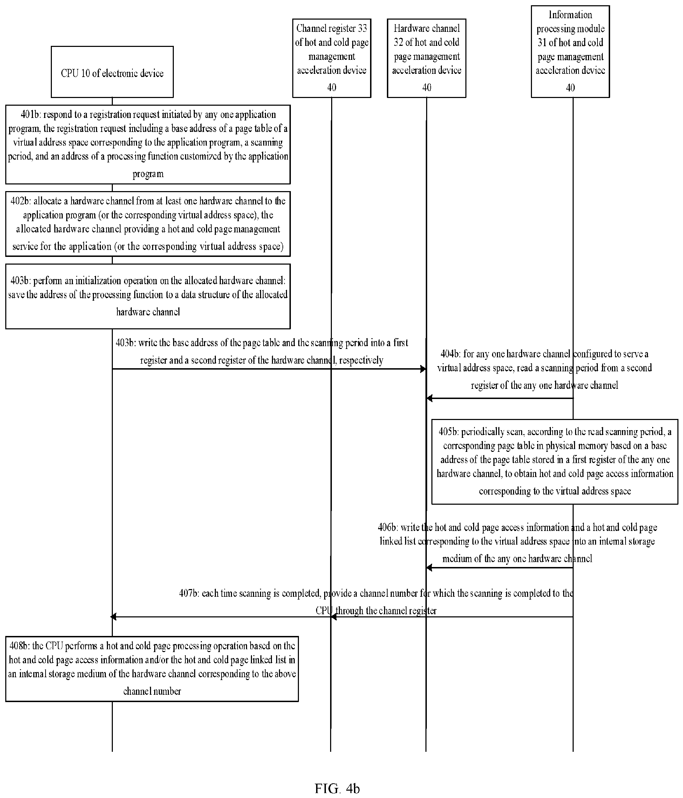

Here, the hot and cold page management acceleration device 30 shown in FIG. 4a is equipped with a driver, which may be installed on the electronic device. The driver records a channel number of at least one hardware channel 32 and provides, for application programs on the electronic device, an application programming interface for registration. Before using the hot and cold page management acceleration device 30 shown in FIG. 4a, the CPU 10 of the electronic device executes the driver of the hot and cold page management acceleration device 30, and registration of application programs, allocation of the hardware channels 32, and initialization of the hardware channels 32 can be completed. After that, the hardware channels 32 may provide hot and cold page management services for virtual address spaces corresponding to the registered application programs. As shown in FIG. 4b, a hot and cold page management method applied to the hot and cold page management acceleration device 30 shown in FIG. 4a includes the following.

The first stage: the CPU 10 of the electronic device executes the driver of the hot and cold page management acceleration device 30 to perform the registration of application programs, the allocation of the hardware channels 32, and initialization operations of the hardware channels 32, including the following steps 401b-403b.

401b: respond to a registration request initiated by any one application program on the electronic device through the registration API in the driver of the hot and cold page management acceleration device, the registration request including the base address of the page table of the virtual address space corresponding to the application program, a scanning period, and an address of a processing function customized by the application program.

402b: allocate a hardware channel from at least one hardware channel to the application program (or the virtual address space corresponding to the application program) that initiates the registration request, the allocated hardware channel providing a hot and cold page management service for the application program (or the virtual address space corresponding to the application program).

403b: perform an initialization operation on the allocated hardware channel: write the base address of the page table and the scanning period that correspond to the virtual address space into the first register and the second register of the allocated hardware channel, respectively, and save the address of the processing function to the data structure of the allocated hardware channel.

The second stage: the information processing module 31 in the hot and cold page management acceleration device 30 cooperates with the hardware channels 32 configured to serve the virtual address spaces to provide hot and cold page services, including the following steps 404b-407b.

404b: for any one hardware channel configured to serve a virtual address space, read the scanning period from the second register of the any one hardware channel.

405b: periodically scan, according to the read scanning period, the corresponding page table in the physical memory based on the base address of the page table stored in the first register of the any one hardware channel, to obtain the hot and cold page access information corresponding to the virtual address space.

406b: write the hot and cold page access information corresponding to the virtual address space into the internal storage medium of the any one hardware channel; and generate a hot and cold page linked list corresponding to the virtual address space based on the hot and cold page access information, and write the hot and cold page linked list into the internal storage medium of the any one hardware channel.

407b: each time scanning is completed, provide a channel number for which the scanning is completed to the CPU through the channel register, so that the CPU performs a hot and cold page processing operation based on the hot and cold page access information and/or the hot and cold page linked list in the internal storage medium of the any one hardware channel.

The third stage: the CPU 10 performs the hot and cold page processing operation based on the hot and cold page access information and/or the hot and cold page linked list, including the following step 408b.

408b: the CPU performs the hot and cold page processing operation based on the hot and cold page access information and/or the hot and cold page linked list in the internal storage medium of the hardware channel corresponding to the above channel number for which the scanning is completed, the hot and cold page processing operation including a default hot and cold page processing operation and/or a customized hot and cold page processing operation defined by the processing function.

It should be noted that for the steps in this embodiment that are the same as those in the above embodiment, the detailed description thereof can be found in the foregoing embodiment, and will not be repeated here.

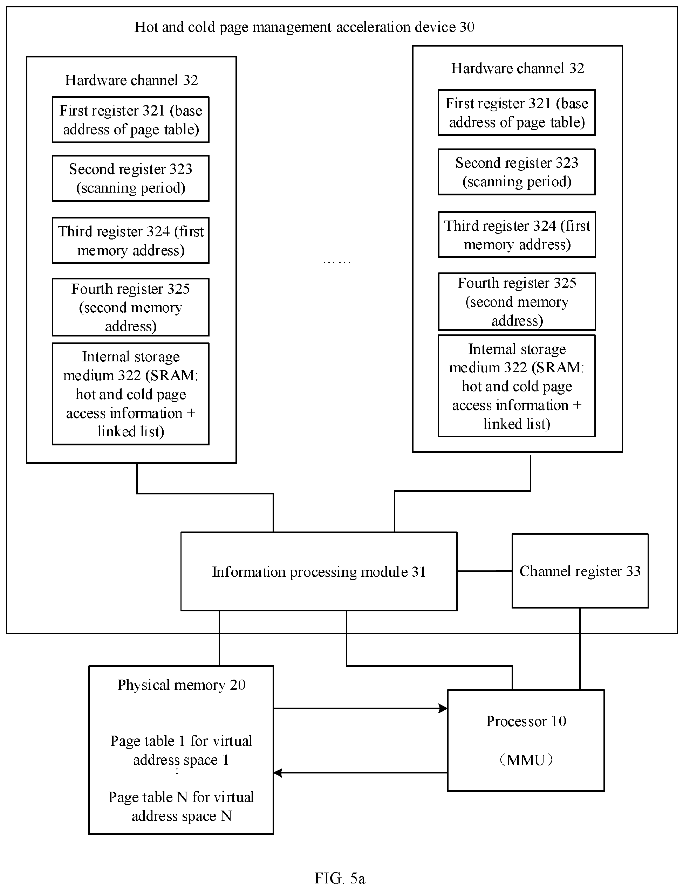

Further, on the basis of the structure of the hot and cold page management acceleration device 30 shown in FIG. 4a, as shown in FIG. 5a, each hardware channel 32 further includes: a third register 324 and/or a fourth register 325. For any one hardware channel 32, when the hardware channel 32 is configured to serve a virtual address space, the third register 324 is used to store a first memory address corresponding to the virtual address space served by the hardware channel 32; correspondingly, the fourth register 325 is used to store a second memory address corresponding to the virtual address space served by the hardware channel 32. Here, the first memory address is used to characterize a memory address in the physical memory 20 for storing the hot and cold page access information corresponding to the virtual address space; the second memory address is used to characterize a memory address in the physical memory 20 for storing the hot and cold page linked list corresponding to the virtual address space. For different application programs or their corresponding virtual address spaces, the first memory addresses used are different, and the second memory addresses used are also different.

In this embodiment, the first memory address is stored in the third register 324 to facilitate the information processing module 31 to provide the hot and cold page access information in the internal storage medium 322 of the corresponding hardware channel 32 to the CPU 10; similarly, the second memory address is stored in the fourth register 325 to facilitate the information processing module 31 to provide the hot and cold page linked list in the internal storage medium 322 of the corresponding hardware channel 32 to the CPU 10.

In this embodiment, the timing of storing the first memory address and/or the second memory address into the third register 324 and/or the fourth register 325 is not limited, and it may be any time before the information processing module 31 provides the hot and cold page access information and/or the hot and cold page linked list to the CPU 10. In an optional embodiment, after the information processing module 31 provides the channel number for which scanning is completed to the CPU 10, the CPU 10 may write the first memory address and/or the second memory address into the third register 324 and/or the fourth register 325, so that the information processing module 31 writes the hot and cold page access information and/or the hot and cold page linked list into the physical memory 20, allowing the CPU 10 to read the hot and cold page access information and/or the hot and cold page linked list from the physical memory 20, thereby achieving the purpose of providing the hot and cold page access information and/or the hot and cold page linked list to the CPU 10.

Further optionally, in the embodiment of this application, the timing of allocating the first memory address and/or the second memory address to the application program is not limited. Optionally, the first memory address and/or the second memory address may be temporarily allocated to the application program when the hot and cold page access information and/or the hot and cold page linked list need to be obtained. For example, after the information processing module 31 provides the channel number for which scanning is completed to the CPU 10, the CPU 10 temporarily calls a memory allocation function in the operating system to allocate the first memory address and/or the second memory address to the application program. Or, optionally, to improve memory allocation efficiency and ensure the timeliness of obtaining the hot and cold page access information and/or the hot and cold page linked list, the first memory address and/or the second memory address may be allocated to the application program in advance. For example, the first memory address and/or the second memory address may be allocated in advance during the initialization process of the hot and cold page management acceleration device 30, and the first memory address and/or the second memory address may be saved in the data structure of the hardware channel 32 serving the application program. In this way, when the CPU 10 receives the channel number provided by the information processing module 31 after scanning this hardware channel 32, the CPU 10 may write the first memory address and/or the second memory address into the third register 324 and/or the fourth register 325, which is not limited here.

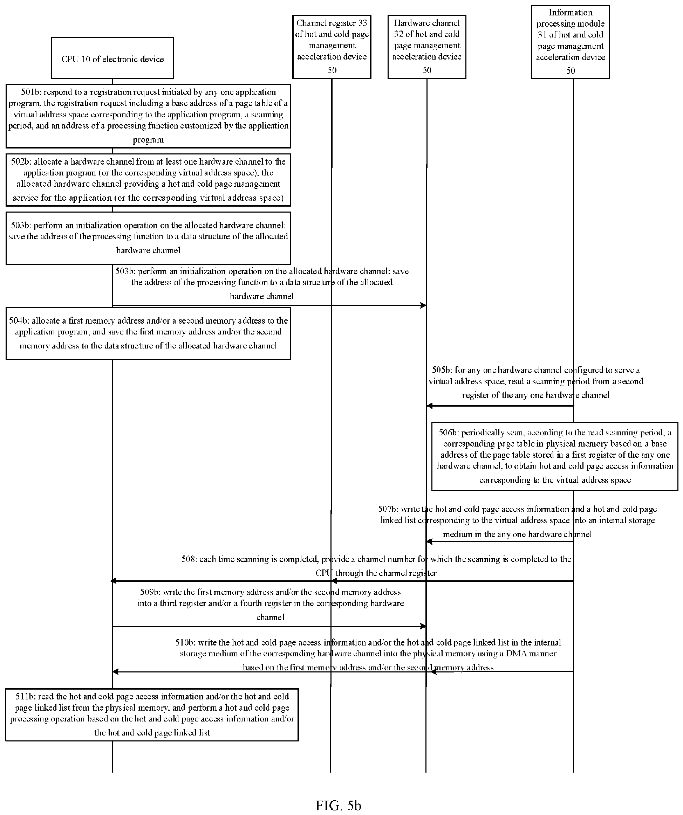

Here, the hot and cold page management acceleration device 30 shown in FIG. 5a is equipped with a driver, which may be installed on the electronic device. The driver records a channel number of at least one hardware channel 32 and provides, for application programs on the electronic device, an application programming interface for registration and an API for reading data in related registers. Before using the hot and cold page management acceleration device 30 shown in FIG. 5a, the CPU 10 of the electronic device executes the driver of the hot and cold page management acceleration device 30, and registration of application programs, allocation of the hardware channels 32, and initialization of the hardware channels 32 can be completed. After that, the hardware channels 32 may provide hot and cold page management services for virtual address spaces corresponding to the registered application programs. As shown in FIG. 5b, a hot and cold page management method applied to the hot and cold page management acceleration device 30 shown in FIG. 5a includes the following.

The first stage: the CPU 10 of the electronic device executes the driver of the hot and cold page management acceleration device 30 to perform the registration of application programs, the allocation of the hardware channels 32, and initialization operations of the hardware channels 32, including the following steps 501b-504b.

501b: respond to a registration request initiated by any one application program on the electronic device through the registration API in the driver of the hot and cold page management acceleration device, the registration request including the base address of the page table of the virtual address space corresponding to the application program, a scanning period, and an address of a processing function customized by the application program.

502b: allocate a hardware channel from at least one hardware channel to the application program (or the virtual address space corresponding to the application program) that initiates the registration request, the allocated hardware channel providing a hot and cold page management service for the application program (or the virtual address space corresponding to the application program).

503b: perform an initialization operation on the allocated hardware channel: write the base address of the page table and the scanning period that correspond to the virtual address space into the first register and the second register of the allocated hardware channel, respectively, and save the address of the processing function to the data structure of the allocated hardware channel.

504b: allocate the first memory address and/or the second memory address to the application program, and save the first memory address and/or the second memory address to the data structure of the allocated hardware channel.

The second stage: the information processing module 31 in the hot and cold page management acceleration device 30 cooperates with the hardware channels 32 configured to serve the virtual address spaces to provide hot and cold page services, including the following steps 505b-509b.

505b: for any one hardware channel configured to serve a virtual address space, read the scanning period from the second register of the any one hardware channel.

506b: periodically scan, according to the read scanning period, the corresponding page table in the physical memory based on the base address of the page table stored in the first register of the any one hardware channel, to obtain the hot and cold page access information corresponding to the virtual address space.

507b: write the hot and cold page access information corresponding to the virtual address space into the internal storage medium of the any one hardware channel; and generate a hot and cold page linked list corresponding to the virtual address space based on the hot and cold page access information, and write the hot and cold page linked list into the internal storage medium of the any one hardware channel.

508b: each time scanning is completed, provide a channel number for which scanning is completed to the CPU through the channel register, so that the CPU performs a hot and cold page processing operation based on the hot and cold page access information and/or the hot and cold page linked list in the internal storage medium of the any one hardware channel.

The third stage: the CPU 10 performs the hot and cold page processing operation based on the hot and cold page access information and/or the hot and cold page linked list, including the following steps 509b-510b.

509b: the CPU writes the first memory address and/or the second memory address into the third register and/or the fourth register of the corresponding hardware channel based on the above channel number for which the scanning is completed, so that the information processing module writes the hot and cold page access information and/or the hot and cold page linked list in the internal storage medium of the corresponding hardware channel into the physical memory.

510b: the information processing module writes the hot and cold page access information and/or the hot and cold page linked list in the internal storage medium of the corresponding hardware channel into the physical memory using a Direct Memory Access (Direct Memory Access, DMA) manner based on the first memory address and/or the second memory address in the third register and/or the fourth register.

511b: the CPU reads the hot and cold page access information and/or the hot and cold page linked list from the physical memory based on the first memory address and/or the second memory address, and performs the hot and cold page processing operation based on the hot and cold page access information and/or the hot and cold page linked list, the hot and cold page processing operation including a default hot and cold page processing operation and/or a customized hot and cold page processing operation defined by the processing function.

It should be noted that for the steps in this embodiment that are the same as those in the above embodiments, the detailed description thereof can be found in the foregoing embodiments, and will not be repeated here.

In the embodiments shown in FIG. 5a and FIG. 5b, the way of the information processing module 31 providing the hot and cold page access information and/or the hot and cold page linked list to the CPU 10 is that the information processing module 31 writes the hot and cold page access information and/or the hot and cold page linked list into the physical memory 20 using the DMA manner based on the first memory address and/or the second memory address provided by the CPU 10, and the CPU 10 reads the hot and cold page access information and/or the hot and cold page linked list from the physical memory 20, but no limitation is imposed thereto. For example, the CPU 10 may also directly read the hot and cold page access information and/or the hot and cold page linked list from the internal storage medium 322 of the corresponding hardware channel 32. Here, the information processing module 31 writes the hot and cold page access information and/or the hot and cold page linked list into the physical memory 20, and the CPU 10 reads the hot and cold page access information and/or the hot and cold page linked list from the physical memory 20, which can reduce I/O operations of the CPU 10, save the overhead of the CPU 10, and improve the efficiency of the CPU 10 obtaining the hot and cold page access information and/or the hot and cold page linked list, and which is a preferred implementation.

In the above embodiments, the implementation of the information processing module 31 providing the channel number for which the scanning is completed to the CPU 10 through the channel register 33 is not limited. Any register usage method that can provide the channel number for which the scanning is completed to the CPU 10 through the channel register 33 is applicable to the embodiments of this application. Examples are given in the following.

In an optional embodiment, each time the information processing module 31 completes scanning a hardware channel 32, the information processing module 31 directly writes the channel number of this hardware channel 32 into the channel register 33. Correspondingly, the CPU 10 may: poll the channel register 33 periodically so as to obtain a channel number newly written into the channel register 33 by the information processing module 31; when a newly written channel number is obtained by polling, read the newly written channel number, and clear the channel register 33 after the newly written channel number is read; then, based on the read channel number, obtain the hot and cold page access information and/or the hot and cold page linked list in the internal storage medium of the hardware channel 32 corresponding to this channel number, and perform the hot and cold page processing operation based on the hot and cold page access information and/or the hot and cold page linked list. Here, the obtaining of the hot and cold page access information and/or the hot and cold page linked list in the internal storage medium of the hardware channel 32 corresponding to the channel number can be found in the above embodiments, and will not be repeated here.

In another optional embodiment, each time the information processing module 31 completes scanning a hardware channel 32, the information processing module 31 directly writes the channel number of this hardware channel 32 into the channel register 33 and triggers a hardware interrupt to the CPU 10. When receiving the hardware interrupt, the CPU 10 reads from the channel register 33 a channel number newly written by the information processing module 31, and clears the channel register 33 after the newly written channel number is read; then, based on the read channel number, the CPU 10 obtains the hot and cold page access information and/or the hot and cold page linked list in the internal storage medium of the hardware channel 32 corresponding to this channel number, and performs the hot and cold page processing operation based on the hot and cold page access information and/or the hot and cold page linked list.

In still another optional embodiment, the channel register 33 includes at least one bit, where one bit corresponds to one hardware channel 32, and the bit may be set or cleared. Based on this, each time the information processing module 31 completes scanning a hardware channel 32, the information processing module 31 sets the bit in the channel register 33 that corresponds to this hardware channel 32, for example, setting it to 1. Correspondingly, the CPU 10 may: poll the channel register 33 periodically so as to obtain a set bit in the channel register 33; when a set bit is obtained by polling, read the channel number corresponding to the set bit, and clear the bit after the newly written channel number is read; then, based on the read channel number, obtain the hot and cold page access information and/or the hot and cold page linked list in the internal storage medium of the hardware channel 32 corresponding to this channel number, and perform the hot and cold page processing operation based on the hot and cold page access information and/or the hot and cold page linked list.

In still another optional embodiment, the channel register 33 includes at least one bit, where one bit corresponds to one hardware channel 32, and the bit may be set or cleared. Each time the information processing module 31 completes scanning, the information processing module 31 sets the bit in the channel register 33 that corresponds to the hardware channel 32 for which the scanning is completed and triggers a hardware interrupt to the CPU 10, so that the CPU 10 obtains from the channel register 33 the channel number of the hardware channel 32 corresponding to the set bit when receiving the hardware interrupt. After obtaining the channel number, the CPU 10 clears the set bit, and obtains, based on the read channel number, the hot and cold page access information and/or the hot and cold page linked list in the internal storage medium of the hardware channel 32 corresponding to this channel number, and performs the hot and cold page processing operation based on the hot and cold page access information and/or the hot and cold page linked list.

Further in an implementation, in the embodiments of this application, the channel register 33 supports atomic operations of channel number reading and bit clearing. Specifically, when the information processing module 31 needs to set the bit in the channel register 33 that corresponds to the hardware channel 32 for which the scanning is completed, if the CPU 10 is accessing the channel register 33 at this time, for example, reading a channel number from the channel register 33 or performing a clearing operation on a corresponding bit after reading a channel number, the information processing module 31 needs to wait for the CPU 10 to complete the access operation on the channel register 33, and then sets the corresponding bit, to ensure the atomicity of the operations of channel number reading and bit clearing.

It should be noted that the product implementation forms of the hot and cold page management acceleration device 30 are not limited in the embodiments of this application, and may be various product implementation forms with the hardware structures described in the above embodiments, which, for example, may be implemented as a chip, a device, a module, or a hardware module, etc.

Further, in the embodiments of this application, the implementation of the information processing module 31 when performing page table scanning, statistics of the hot and cold page access information, and maintenance of the hot and cold page linked list are not limited. The information processing module 31 may be implemented purely in hardware, purely in software, or in a combination of hardware and software. Here, the implementation of the combination of hardware and software means that the information processing module 31 includes both a hardware module implemented based on a programmable device and a processing unit. The processing unit executes built-in program code and cooperates with the hardware module implemented based on the programmable device to implement the page table scanning, the statistics of the hot and cold page access information, and the maintenance of the hot and cold page linked list. The purely software implementation means that the page table scanning, the statistics of the hot and cold page access information, and the maintenance of the hot and cold page linked list are all implemented by a processing unit executing built-in program code. The purely hardware implementation means that the page table scanning, the statistics of the hot and cold page access information, and the maintenance of the hot and cold page linked list are all implemented by a hardware module implemented based on a programmable device. Here, the programmable device may be, but is not limited to: a Complex Programmable Logic Device (Complex Programmable Logic Device, CPLD), a Field Programmable Gate Array (Field Programmable Gate Array, FPGA), etc. When the purely software implementation or the implementation of the combination of hardware and software is used, the processing unit that may execute program code may be, but is not limited to: a CPU, a graphics processing unit, a Graphics processing unit (Graphics Processing Unit, GPU) or an ARM processor, a self-developed cloud computing chip, etc.

Here, when the information processing module 31 is implemented purely in hardware, the hot and cold page management acceleration device may be implemented as a purely hardware-based chip, device, module, or hardware module, etc. Correspondingly, when the information processing module 31 is implemented purely in software or in a combination of hardware and software, the hot and cold page management acceleration device is implemented as a hardware-software combined chip, device, module, or hardware module, etc. In the following embodiments of this application, an information processing module 31 implemented purely in hardware and an information processing module 31 implemented in a combination of hardware and software will be exemplarily given.

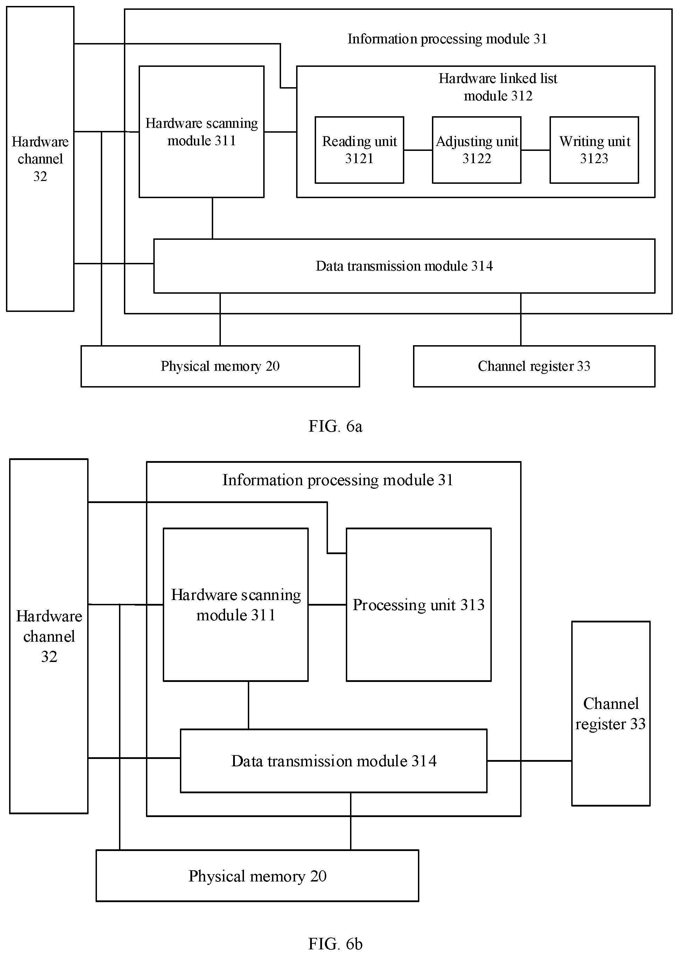

FIG. 6a is a schematic structural diagram of an information processing module implemented purely in hardware according to an embodiment of this application. As shown in FIG. 6a, the information processing module includes at least: a hardware scanning module 311 and a hardware linked list module 312, which are implemented based on programmable devices.

Here, the hardware scanning module 311 is interconnected with respective hardware channels 32 and physical memory 20, and is configured to: for any one hardware channel configured to serve a virtual address space, periodically scan a corresponding page table in the physical memory based on a base address of the page table stored in a first register of the any one hardware channel, to obtain hot and cold page access information corresponding to the virtual address space, and write it into an internal storage medium of the any one hardware channel.

The hardware linked list module 312 is interconnected with the hardware scanning module 311 and the respective hardware channels 32, and is configured to: generate a hot and cold page linked list corresponding to the virtual address space based on the hot and cold page access information in the internal storage medium of the any one hardware channel, and write it into the internal storage medium of the any one hardware channel, so that the CPU performs a hot and cold page processing operation based on the hot and cold page access information and/or the hot and cold page linked list in the internal storage medium of the any one hardware channel.

Further, as shown in FIG. 6a, the hardware linked list module 312 includes: a reading unit 3121, an adjusting unit 3122, and a writing unit 3123, which are implemented based on programmable devices. Here, the reading unit 3121 is interconnected with the hardware scanning module 311 and the respective hardware channels 32, and is configured to: in response to a read trigger operation issued by the hardware scanning module 311 each time scanning is completed, read current hot and cold page access information and a current hot and cold page linked list from the internal storage medium of the any one hardware channel, and provide them to the adjusting unit 3122. The adjusting unit 3122 is interconnected with the reading unit 3121, and is configured to adjust the order of page nodes in the current hot and cold page linked list based on the current hot and cold page access information, to obtain an adjusted hot and cold page linked list, and provide it to the writing unit 3123. Here, each page node corresponds to a page in the virtual address space. The writing unit 3123 is interconnected with the adjusting unit 3122 and the respective hardware channels 32, and is configured to write the adjusted hot and cold page linked list into the internal storage medium of the any one hardware channel to replace the hot and cold page linked list before adjustment.

In this embodiment, the adjusting unit 3122 is specifically configured to: parse out address information of at least one target page from the current hot and cold page access information, where the target page is a page in the virtual address space that is accessed within a current scanning period; based on the address information of the at least one target page, move a page node corresponding to the at least one target page to the head of the current hot and cold page linked list in sequence, to obtain the adjusted hot and cold page linked list.

FIG. 6b is a schematic structural diagram of an information processing module implemented in a combination of hardware and software according to an embodiment of this application. As shown in FIG. 6b, the information processing module includes: a processing unit 313, and a hardware scanning module 311 based on a programmable device, where the processing unit 313 is equipped with a built-in linked list maintenance program.

The hardware scanning module 311 is interconnected with respective hardware channels 32 and physical memory 20, and is configured to: for any one hardware channel configured to serve a virtual address space, periodically scan a corresponding page table in the physical memory based on a base address of the page table stored in a first register of the any one hardware channel, to obtain hot and cold page access information corresponding to the virtual address space, and write it into an internal storage medium of the any one hardware channel.

The processing unit 313 is interconnected with the hardware scanning module 311 and the respective hardware channels 32, and is configured to execute the built-in linked list maintenance program to: generate a hot and cold page linked list corresponding to the virtual address space based on the hot and cold page access information in the internal storage medium of the any one hardware channel, and write it into the internal storage medium of the any one hardware channel, so that the CPU performs a hot and cold page processing operation based on the hot and cold page access information and/or the hot and cold page linked list in the internal storage medium of the any one hardware channel.

In an optional embodiment, when generating the hot and cold page linked list corresponding to the virtual address space, the processing unit 313 is specifically configured to: in response to a read trigger operation issued by the hardware scanning module 311 each time scanning is completed, read current hot and cold page access information and a current hot and cold page linked list from the internal storage medium of the any one hardware channel; recalculate access hotness values of page nodes in the current hot and cold page linked list based on the current hot and cold page access information, where each page node corresponds to a page in the virtual address space; adjust the order of the page nodes in the current hot and cold page linked list based on the access hotness values of the page nodes, to obtain an adjusted hot and cold page linked list, and write it into the internal storage medium of the any one hardware channel to replace the hot and cold page linked list before adjustment. Here, adjusting the order of the page nodes in the current hot and cold page linked list based on the access hotness values of the page nodes may be to move a page node with an increased access hotness value towards the head of the linked list, and move a page node with a decreased access hotness value towards the end of the linked list, so as to finally obtain a sorting result where the page nodes are arranged in descending order of the access hotness values from the head of the linked list to the end of the linked list.

In an optional embodiment, each time scanning is completed, address information of at least one target page accessed within a current scanning period may be parsed out from current hot and cold page access information; for a page node corresponding to the accessed target page, it may be considered as having the highest access hotness value. Based on this, when recalculating the access hotness values of the page nodes in the current hot and cold page linked list, the processing unit 313 may parse out the address information of at least one target page accessed within the current scanning period from the current hot and cold page access information, and based on the address information of the at least one target page, move the at least one target page to the head of the current hot and cold page linked list in sequence, to obtain an adjusted hot and cold page linked list. Optionally, it is feasible to move the page node corresponding to the at least one target page to the head of the current hot and cold page linked list in the order of the address information of the target page from small to large, to obtain the adjusted hot and cold page linked list.

In another optional embodiment, in addition to storing the address information of the corresponding pages, the page nodes in the hot and cold page linked list may further store access information of the corresponding pages. Access information of a page includes at least one of the following: visitor information, access time, the number of accesses, or an access type. Here, the visitor information refers to information of a process for accessing this page, the information of the process including, but not limited to: an identifier and a type of the process; the access time refers to time information of this page being accessed within a specified time period, and the number of accesses refers to the number of times of this page being accessed within a specified time period; the access type refers to the type of access to this page, such as a read operation or a write operation. Based on this, when recalculating the access hotness values of the page nodes in the current hot and cold page linked list, the processing unit 313 is specifically configured to: recalculate the access hotness values of the page nodes within a specified period based on the current hot and cold page access information and in combination with the access information of the corresponding pages recorded in the page nodes. In this implementation, the access hotness values of the page nodes can be determined based on more abundant information, no longer relying solely on whether the pages are accessed, which can improve the accuracy of the hot and cold pages maintained by the hot and cold page linked list, and can meet more abundant application requirements. Examples are provided as follows.

In an exemplary embodiment, the latest access hotness values of the page nodes within the most recent time period may be calculated based on the latest number of accesses to the page nodes within the most recent time period. Specifically, each time scanning is completed, the current hot and cold page access information (that is, the latest hot and cold page access information) may be obtained from the internal storage medium. Address information and access time of at least one target page accessed within the current scanning period may be determined based on the current hot and cold page access information, and access information recorded in the corresponding page node may be updated based on the address information and the access time of the at least one target page, which mainly refers to adding the access time of one access. Then, based on the access time of each access of each page, the number of accesses whose access time is within the most recent time period is accumulated, and the number of accesses whose access time no longer belongs to the most recent time period no longer participates in the accumulation, thus obtaining the latest number of accesses. Here, the greater the number of accesses within the most recent time period is, the greater the access hotness value of the page node is. Optionally, the number of accesses may be directly used as the access hotness value; or, numerical calculation may be performed based on the number of accesses (for example, being multiplied by a preset weight coefficient), and a numerical calculation result may be used as the access hotness value. Here, the most recent time period may be the last one hour, the last 10 minutes, the last half day, the last one day, or the last one week, etc., which is not limited here.

In an exemplary embodiment, the latest access hotness values of the page nodes within the most recent time period may be calculated based on the number of accesses to the page nodes by a specified type of visitors within the most recent time period. Specifically, each time scanning is completed, the current hot and cold page access information (that is, the latest hot and cold page access information) may be obtained from the internal storage medium. Address information and visitor information of at least one target page accessed within the current scanning period may be determined based on the current hot and cold page access information, and access information recorded in the corresponding page node may be updated based on the address information and the visitor information of the at least one target page, which mainly refers to adding the access time and the visitor information of one access. Then, based on the access time and the visitor information of each access of each page, the number of accesses whose access time is within the most recent time period and which are initiated by the specified type of visitors is accumulated, and both the number of accesses whose access time no longer belongs to the most recent time period and the number of accesses which do not belong to those initiated by the specified type of visitors no longer participate in the accumulation, thus obtaining the latest number of accesses. Here, the greater the number of accesses by the specified type of visitors within the most recent time period is, the greater the access hotness value of the page node is.

In an exemplary embodiment, the latest access hotness values of the page nodes within the most recent time period may be calculated based on the number of accesses belonging to a specified access type for the page nodes within the most recent time period. Specifically, each time scanning is completed, the current hot and cold page access information (that is, the latest hot and cold page access information) may be obtained from the internal storage medium. Address information and an access type (for example, read or write) of at least one target page accessed within the current scanning period may be determined based on the current hot and cold page access information, and access information recorded in the corresponding page node may be updated based on the address information and the access type of the at least one target page, which mainly refers to adding the access time and the access type of one access. Then, based on the access time and the access type of each access of each page, the number of accesses whose access time is within the most recent period and which belong to the specified access type is accumulated, and both the number of accesses whose access time no longer belongs to the most recent period and the number of accesses which do not belong to the specified access type no longer participate in the accumulation, thus obtaining the latest number of accesses. Here, the greater the number of accesses belonging to the specified access type within the most recent period is, the greater the access hotness value of the page node is.

In the embodiment shown in FIG. 6b, the hot and cold page linked list is updated and maintained in a software-based manner, which has higher flexibility and can update and maintain hot and cold pages in higher granularity and greater diversity, especially suitable for relatively complex medium exchange scenarios. For example, for a storage system with multiple levels, updating and maintaining hot and cold page linked lists in a software-based manner can provide finer-grained access hotness values as per application program requirements, and the access hotness values can be calculated in different ways for different levels of storage media, to meet exchange requirements between different levels of storage media. For example, for a storage medium in the highest level, finer-grained access hotness values may be used (that is, the calculation method of the access hotness values is more complex, considering multiple factors at the same time), to reduce the frequency of page exchange and avoid frequent swapping in and out of pages; for a storage medium in a middle or lower level, the page access frequency is relatively low, and relatively coarse-grained access hotness values may be used (that is, the calculation method of the access hotness values may be relatively simple, which may focus on a certain factor), to reduce the computational resources consumed by page exchange.

Further in an implementation, on the basis of the structure of the hot and cold page management acceleration device shown in FIG. 5a, as shown in FIG. 6a and FIG. 6b, the information processing module further includes: a data transmission module 314 implemented based on a programmable device. Here, each time scanning is completed, the hardware scanning module 311 not only issues a read trigger operation to the reading unit, but also will trigger a hardware interrupt to the CPU. At this time, the CPU reads a channel number for which scanning is completed from the channel register 33 based on the hardware interrupt, and writes a first memory address and/or a second memory address into a third register and/or a fourth register of the hardware channel corresponding to this channel number, to trigger the data transmission module to perform data transmission. The data transmission module 314 is interconnected with the respective hardware channels 32, the physical memory 20 and the channel register 33. On the one hand, the data transmission module 314 reads the first memory address and/or the second memory address from the third register and/or the fourth register; on the other hand, the data transmission module 314 reads the hot and cold page access information and/or the hot and cold page linked list from the internal storage medium of the corresponding hardware channel, and writes the hot and cold page access information and/or the hot and cold page linked list into the physical memory based on the first memory address and/or the second memory address using a DMA manner, so that the CPU directly reads the hot and cold page access information and/or the hot and cold page linked list from the physical memory.

Regardless of the implementation of the hot and cold page management acceleration device provided in the embodiments of this application, and regardless of the methods used to perform statistics on the hot and cold page access information and to update and maintain the hot and cold page linked list, in the embodiments of this application, the dedicated hot and cold page management acceleration device is used to replace the CPU to perform the page table scanning, the statistics of the hot and cold page access information, and the update and maintenance of the hot and cold page linked list, which not only can reduce CPU resource consumption, but also can improve the frequency of page table scanning by leveraging hardware advantages, thereby improving the accuracy of the hot and cold page access information and the hot and cold page linked list, improving the rationality of medium exchange, helping to avoid frequent swapping in and out of virtual pages, and thus improving the utilization of the space of the physical memory and I/O performance.

In the above embodiments of this application, the implementation structures of the hot and cold page management acceleration device and the implementation structures of the electronic device including the hot and cold page management acceleration device have been described. In the electronic device, the hot and cold page management acceleration device is interconnected between the CPU and the physical memory through an interconnection bus. Optionally, in FIG. 1, the illustration is given by taking an example where the hot and cold page management acceleration device provided in the embodiment of this application is taken as an independent chip, hardware module, or module, and interconnected between the CPU and the physical memory, but no limitation is imposed thereto.

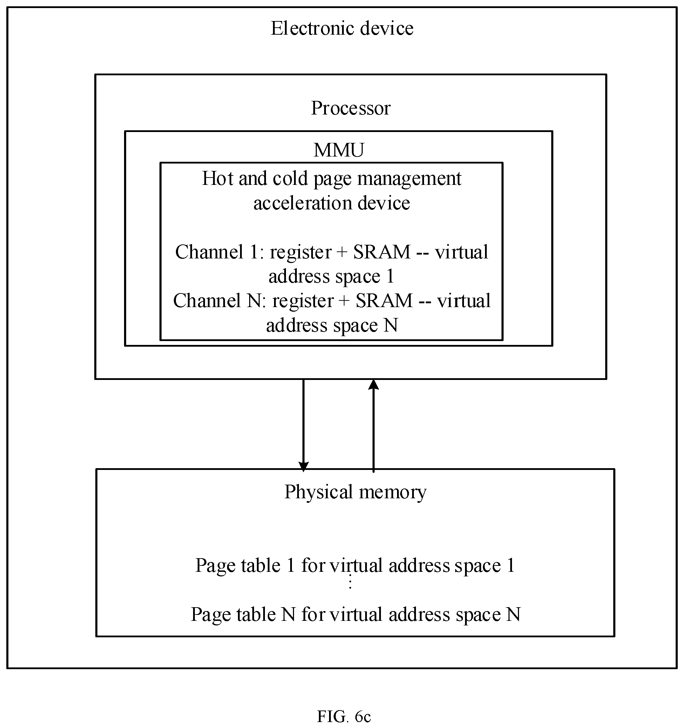

In addition to being implemented as a chip, a hardware module, or a module, the hot and cold page management acceleration device provided in the embodiments of this application may also be implemented as a chip or module inside an MMU, which is embedded in the MMU. Here, the MMU is a separate module of a CPU, and is a component responsible for converting a virtual address that the CPU wants to access into an actual physical address. In some optional embodiments of this application, a new type of MMU is provided, and this MMU includes the hot and cold page management acceleration device provided in the embodiments of this application inside. The new type of MMU has various functions of a traditional MMU, and in addition, may provide a hot and cold page management service for at least one virtual address space corresponding to physical memory through the hot and cold page management acceleration device. The structure of the hot and cold page management acceleration device and the detailed process of providing the hot and cold page management service can be found in the foregoing embodiments, and will not be repeated here. Based on this, an embodiment of this application further provides a new type of processor, which includes the new type of MMU provided in the embodiments of this application. Further, an embodiment of this application further provides a new type of electronic device, which includes the new type of processor provided in the embodiments of this application, as shown in FIG. 6c.

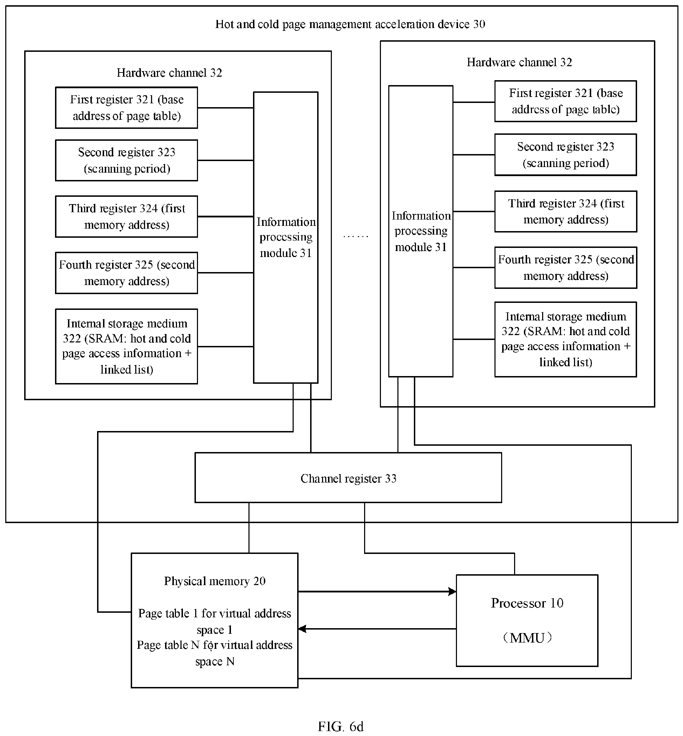

In the embodiments shown in FIG. 3a, FIG. 4a, FIG. 5a, FIG. 6a and FIG. 6b, the implementation structures of the hot and cold page management acceleration device are illustrated by taking examples where the information processing module 31 is independent of the hardware channels 32 and the hardware channels 32 share one information processing module 31, but the implementation structure of the hot and cold page management acceleration device is not limited to this. For example, in the embodiment shown in FIG. 6d, the number of information processing modules 31 is the same as the number of hardware channels 32. Each hardware channel 32 not only includes the registers and the internal storage medium mentioned in the foregoing embodiments, but also includes an information processing module 31, that is, each hardware channel 32 is equipped with its own dedicated information processing module 31. In this way, when each hardware channel 32 is configured to serve a virtual address space, the information processing module 31 in the hardware channel 32 may specifically perform page table scanning, statistics of hot and cold page access information, and update and maintenance of a hot and cold page linked list for the hardware channel 32.

Specifically, for any one hardware channel 32, when it is configured to serve a virtual address space, on the one hand, the information processing module 31 in the hardware channel 32 may periodically scan the corresponding page table in the physical memory 20 based on the base address of the page table stored in the first register 321 of the hardware channel 32, to periodically obtain the hot and cold page access information corresponding to the virtual address space served by the hardware channel 32, and write the hot and cold page access information into the internal storage medium 322 of the hardware channel 32. On the other hand, the information processing module 31 in the hardware channel 32 may: generate the hot and cold page linked list corresponding to the virtual address space based on the obtained hot and cold page access information, and write the hot and cold page linked list into the internal storage medium 322 of the hardware channel 32; and each time scanning is completed, provide the channel number for which the scanning is completed to the CPU 10 through the channel register 33, so that the CPU 10 performs a hot and cold page processing operation based on the hot and cold page access information in the internal storage medium 322 of the hardware channel 32 corresponding to the channel number for which the scanning is completed. The detailed implementation of the above operations is basically the same as the foregoing embodiments, and the only difference is that the information processing module performing the above operations is no longer shared, but is dedicated to a respective hardware channel, so no repetition will be given here.

It should be noted that in the embodiment shown in FIG. 6d, the first register 321, the internal storage medium 322, and the information processing module 31 are necessary components of each hardware channel 32, while the second register 323, the third register 324, and the fourth register 325 are optional components. In FIG. 6d, illustration is given by taking an example where each hardware channel 32 includes the first register 321, the internal storage medium 322, the information processing module 31, the second register 323, the third register 324, and the fourth register 325, but no limitation is imposed thereto. As shown in FIG. 6d, inside each hardware channel, the information processing module 31 is interconnected with the first register 321, the internal storage medium 322, the second register 323, the third register 324, and the fourth register 325, respectively. In addition, the information processing module 31 within each hardware channel 32 is interconnected with the channel register 33, and is used to provide a channel number for which scanning is completed to the CPU 10 through the channel register 33. The information processing module 31 within each hardware channel 32 is interconnected with the physical memory 20, and it is used to scan the page table in the physical memory on the one hand, and may write the hot and cold page access information and/or the hot and cold page linked list into the physical memory 20 on the other hand.

It should be noted that when each hardware channel 32 includes its own dedicated information processing module 31, each information processing module 31 may still adopt the implementation structure shown in FIG. 6a or FIG. 6b, where the modules and their functions are the same as the foregoing embodiments, and the only difference is that the connection relationships between the modules and other components may change. For example, the hardware scanning module does not need to be interconnected with the various hardware channels, but only needs to be interconnected with the registers and the internal memory in the hardware channel to which it belongs. So no repetition will be given here.

Similarly, in the above embodiments, illustration is given by taking examples where the channel register 33 is shared by the hardware channels 32, but no limitation is imposed thereto. For example, each hardware channel may also be equipped with its own dedicated channel register 33, and the role of each dedicated channel register 33 is the same as that of the shared channel register 33. Based on the implementation structures of various hot and cold page management acceleration devices provided in the foregoing embodiments, those skilled in the art can unambiguously infer the implementation structure and the working principle of each hardware channel including its own dedicated channel register 33, which will not be repeated here.

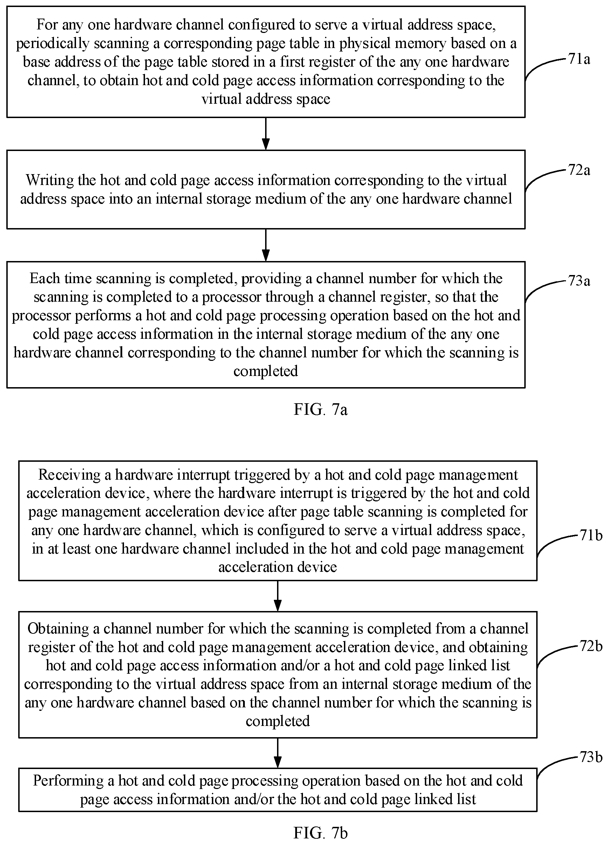

FIG. 7a is a schematic flowchart of a hot and cold page management method according to an embodiment of this application. The hot and cold page management method shown in FIG. 7a may be applied to a hot and cold page management acceleration device interconnected between a processor and physical memory of an electronic device. The hot and cold page management acceleration device includes at least one hardware channel and a channel register, and at least part of the at least one hardware channel includes a first register and an internal storage medium. The detailed implementation structure of the hot and cold page management acceleration device can be found in the description in the foregoing embodiments, and will not be repeated here. As shown in FIG. 7a, the method includes:
71a: for any one hardware channel configured to serve a virtual address space, periodically scanning a corresponding page table in the physical memory based on a base address of the page table stored in a first register of the any one hardware channel, to obtain hot and cold page access information corresponding to the virtual address space;
72a: writing the hot and cold page access information corresponding to the virtual address space into an internal storage medium of the any one hardware channel;
73a: each time scanning is completed, providing a channel number for which the scanning is completed to the processor through the channel register, so that the processor performs a hot and cold page processing operation based on the hot and cold page access information in the internal storage medium of the any one hardware channel corresponding to the channel number for which the scanning is completed.

In an optional embodiment, the method further includes: generating a hot and cold page linked list corresponding to the virtual address space based on the hot and cold page access information in the internal storage medium of the any one hardware channel; writing the hot and cold page linked list corresponding to the virtual address space into the internal storage medium of the any one hardware channel, so that the processor performs the hot and cold page processing operation based on the hot and cold page access information and/or the hot and cold page linked list in the internal storage medium of the any one hardware channel.

In an optional embodiment, the above generating the hot and cold page linked list corresponding to the virtual address space based on the hot and cold page access information in the internal storage medium of the any one hardware channel includes:
in response to a read trigger operation after scanning is completed, reading current hot and cold page access information and a current hot and cold page linked list from the internal storage medium of the any one hardware channel;
adjusting an order of page nodes in the current hot and cold page linked list based on the current hot and cold page access information, to obtain an adjusted hot and cold page linked list, where each of the page nodes corresponds to a page in the virtual address space.

In an optional embodiment, the above adjusting the order of the page nodes in the current hot and cold page linked list based on the current hot and cold page access information, to obtain the adjusted hot and cold page linked list, includes:
parsing out address information of at least one target page from the current hot and cold page access information, where the target page is a page in the virtual address space that is accessed within a current scanning period; based on the address information of the at least one target page, moving a page node corresponding to the at least one target page to the head of the current hot and cold page linked list in sequence, to obtain the adjusted hot and cold page linked list;
   or
recalculating access hotness values of the page nodes in the current hot and cold page linked list based on the current hot and cold page access information; adjusting the order of the page nodes in the current hot and cold page linked list based on the access hotness values of the page nodes, to obtain the adjusted hot and cold page linked list.

In an optional embodiment, the above recalculating the access hotness values of the page nodes in the current hot and cold page linked list based on the current hot and cold page access information includes: recalculating the access hotness values of the page nodes within a specified period based on the current hot and cold page access information and in combination with access information of corresponding pages recorded in the page nodes; where the access information of a page includes at least one of the following: visitor information, access time, the number of accesses, or an access type.

In an optional embodiment, the above periodically scanning the corresponding page table in the physical memory based on the base address of the page table stored in the first register of the any one hardware channel, to obtain the hot and cold page access information corresponding to the virtual address space, includes: reading a scanning period from a second register of the any one hardware channel, the scanning period being a scanning period corresponding to the virtual address space served by the any one hardware channel; periodically scanning, according to the scanning period, the corresponding page table in the physical memory based on the base address of the page table stored in the first register of the any one hardware channel, to obtain the hot and cold page access information corresponding to the virtual address space.

In an optional embodiment, the above method further includes: reading a first memory address and/or a second memory address from a third register and/or a fourth register of the hardware channel corresponding to the channel number for which the scanning is completed, the first memory address and/or the second memory address being used to characterize a memory address in the physical memory for storing the hot and cold page access information and/or the hot and cold page linked list; writing the hot and cold page access information and/or the hot and cold page linked list in the internal storage medium of the hardware channel into the physical memory based on the first memory address and/or the second memory address, so that the processor performs the hot and cold page processing operation based on the hot and cold page access information and/or the hot and cold page linked list.

The detailed implementation processes of the steps in the embodiment shown in FIG. 7a can be found in the relevant descriptions in the foregoing embodiments, and will not be repeated here.

FIG. 7b is a schematic flowchart of another hot and cold page management method according to an embodiment of this application. The hot and cold page management method shown in FIG. 7b is applied to a processor in an electronic device. The processor is interconnected with a hot and cold page management acceleration device. The implementation structure of the hot and cold page management acceleration device can be found in the foregoing embodiments, and will not be repeated here. As shown in FIG. 7b, the method in this embodiment includes:
71b: receiving a hardware interrupt triggered by the hot and cold page management acceleration device, where the hardware interrupt is triggered by the hot and cold page management acceleration device after page table scanning is completed for any one hardware channel, which is configured to serve a virtual address space, in at least one hardware channel contained in the hot and cold page management acceleration device;
72b: obtaining a channel number for which scanning is completed from a channel register of the hot and cold page management acceleration device, and obtaining hot and cold page access information and/or a hot and cold page linked list corresponding to the virtual address space from an internal storage medium of the any one hardware channel based on the channel number for which the scanning is completed;
73b: performing a hot and cold page processing operation based on the hot and cold page access information and/or the hot and cold page linked list.

In an optional embodiment, the above obtaining the hot and cold page access information and/or the hot and cold page linked list corresponding to the virtual address space from the internal storage medium of the any one hardware channel based on the channel number for which the scanning is completed includes:
writing a first memory address and/or a second memory address into a third register and/or a fourth register of the any one hardware channel based on the channel number for which the scanning is completed, so that the hot and cold page management acceleration device writes the hot and cold page access information and/or the hot and cold page linked list into physical memory of the electronic device; obtaining the hot and cold page access information and/or the hot and cold page linked list from the physical memory based on the first memory address and/or the second memory address.

In an optional embodiment, the method in this embodiment further includes: in response to a registration request of any one application program on the electronic device, allocating, to a virtual address space corresponding to the any one application program, a hardware channel that provides a hot and cold page management service for the virtual address space corresponding to the any one application program, obtaining a base address of a page table and a scanning period that correspond to the virtual address space, and allocating a first memory address and/or a second memory address to the virtual address space; and in response to an initialization operation for the allocated hardware channel, writing the base address of the page table and the scanning period that correspond to the virtual address space into the first register and the second register of the allocated hardware channel, and saving the first memory address and/or the second memory address to a data structure of the allocated hardware channel, so that the processor writes the first memory address and/or the second memory address into the third register and/or the fourth register after obtaining a channel number of the allocated hardware channel, and thus the hot and cold page management acceleration device writes the hot and cold page access information and/or the hot and cold page linked list into the physical memory of the electronic device.

The detailed implementation processes of the steps in the embodiment shown in FIG. 7b can be found in the relevant descriptions in the foregoing embodiments, and will not be repeated here.

Correspondingly, an embodiment of this application further provides a computer-readable storage medium storing a computer program, and when the computer program is executed by a processor, the processor is caused to be able to implement the steps that can be executed by the processor or the processing unit in the above method embodiments.

Correspondingly, an embodiment of this application further provides a computer program product, including a computer program/instructions, and when the computer program/instructions are executed by a processor, the processor is caused to be able to implement the steps that can be executed by the processor or the processing unit in the above method embodiments.

The above communication component is configured to facilitate wired or wireless communication between a device where the communication component is located and other devices. The device where the communication component is located may access a wireless network based on a communication standard, such as Wi-Fi, 2G, 3G, 4G/LTE, 5G, and other mobile communication networks, or a combination of them. In an exemplary embodiment, the communication component receives broadcast signals or broadcast-related information from an external broadcast management system via a broadcast channel. In an exemplary embodiment, the communication component further includes a Near Field Communication (NFC) module to facilitate short-range communication. For example, the NFC module may be implemented based on Radio Frequency Identification (Radio Frequency Identification, RFID) technology, Infrared Data Association (Infrared Data Association, IrDA) technology, Ultra Wideband (Ultra Wideband, UWB) technology, Bluetooth (Bluetooth, BT) technology, and other technologies.

The above display includes a screen, and its screen may include a Liquid Crystal Display (Liquid Crystal Display, LCD) and a Touch Panel (TouchPanel, TP). If the screen includes the touch panel, the screen may be implemented as a touch screen to receive input signals from users. The touch panel includes one or more touch sensors to sense touch, slide, and gestures on the touch panel. The touch sensor may not only sense the boundary of a touch or slide action, but also detect the duration and pressure related to the touch or slide operation.

The above power component provides power to various components of the device where the power component is located. The power component may include a power management system, one or more power supplies, and other components related to generating, managing, and distributing power for the device where the power component is located.

The above audio component may be configured to output and/or input audio signals. For example, the audio component includes a Microphone (Microphone, MIC). When the device where the audio component is located is in an operation mode, such as a call mode, a recording mode, and a voice recognition mode, the microphone is configured to receive external audio signals. The received audio signals may be further stored in a memory or sent via a communication component. In some embodiments, the audio component further includes a speaker for outputting audio signals.

Those skilled in the art should understand that the embodiments of this application may be provided as methods, systems, or computer program products. Therefore, this application may adopt the form of complete-hardware embodiments, complete-software embodiments, or embodiments combining software and hardware. Moreover, this application may adopt the form of a computer program product implemented on one or more computer-readable storage media (including but not limited to a disk storage, a read-only optical disc (Compact Disc Read-Only Memory, CD-ROM), an optical storage, etc.) containing computer-usable program code.

This application is described with reference to the flowcharts and/or block diagrams of the methods, devices (systems), and computer program products based on the embodiments of this application. It should be understood that each process and/or block in the flowcharts and/or block diagrams, and the combination of processes and/or blocks in the flowcharts and/or block diagrams may be implemented by computer program instructions. These computer program instructions may be provided to a processor of a general-purpose computer, a special-purpose computer, an embedded processor, or other programmable data processing devices to generate a machine, so that the instructions executed by the processor of the computer or other programmable data processing devices generate an apparatus for implementing the functions specified in one or more processes in the flowcharts and/or one or more blocks in the block diagrams.

These computer program instructions may also be stored in a computer-readable memory that may guide a computer or other programmable data processing devices to work in a specific way, so that the instructions stored in the computer-readable memory generate a manufactured product including an instruction apparatus, which implements the functions specified in one or more processes in the flowcharts and/or one or more blocks in the block diagrams.

These computer program instructions may also be loaded onto a computer or other programmable data processing devices, so that a series of operation steps are executed on the computer or other programmable devices to generate computer-implemented processing, and thus the instructions executed on the computer or other programmable devices provide steps for implementing the functions specified in one or more processes in the flowcharts and/or one or more blocks in the block diagrams.

In a typical configuration, a computing device includes one or more processors (Central Processing Units, CPUs), input/output interfaces, network interfaces, and memory.

Memory may include a non-permanent memory, a Random Access Memory (Random Access Memory, RAM), and/or a non-volatile memory, such as a Read-Only Memory (Read-Only Memory, ROM) or a flash memory (flash RAM) in computer-readable media. Memory is an example of computer-readable media.

Computer-readable media include permanent and non-permanent, removable and non-removable media, which may implement information storage via any method or technology. Information may be computer-readable instructions, data structures, program modules, or other data. Examples of computer storage media include, but are not limited to, phase change memory (Phase-change Random Access Memory, PRAM), Static Random-Access Memory (Static Random-Access Memory, SRAM), Dynamic Random Access Memory (Dynamic Random Access Memory, DRAM), other types of Random Access Memory (RAM), Read-Only Memory (ROM), Electrically Erasable Programmable Read-Only Memory (Electrically Erasable Programmable Read-Only Memory, EEPROM), flash memory or other memory technology, Read-Only Compact Disc Read-Only Memory (CD-ROM), Digital Video Disc (Digital Video Disc, DVD) or other optical storage, magnetic cassettes, magnetic tape magnetic disk storage or other magnetic storage devices or any other non-transmission media, which may be used to store information that can be accessed by computing devices. In accordance with the definitions herein, computer-readable media do not include transitory computer-readable media (transitory media), such as modulated data signals and carrier waves.

It should also be noted that the terms "include", "comprise" or any other variants thereof are intended to cover non-exclusive inclusion, so that a process, method, commodity or device that includes a series of elements not only includes those elements, but also includes other elements that are not explicitly listed, or includes elements inherent to the process, method, commodity or device. Without more restrictions, an element defined by the sentence "including a/an/one..." does not exclude the existence of other identical elements in the process, method, commodity or device that includes the element.

The above is only the embodiments of this application and is not used to limit this application. For those skilled in the art, this application may have various modifications and changes. Any modifications, equivalent replacements, improvements and the like made within the spirit and principles of this application shall be included in the scope of the claims of this application.

## Claims

1. A hot and cold page management acceleration device, interconnected between a processor and physical memory of an electronic device, and configured to provide a hot and cold page management service for at least one virtual address space corresponding to the physical memory; wherein the hot and cold page management acceleration device comprises: an information processing module, at least one hardware channel, and a channel register, wherein at least part of the at least one hardware channel comprises a first register and an internal storage medium;
the first register is configured to: when a hardware channel to which the first register belongs is configured to serve a virtual address space, store a base address of a page table of the virtual address space, wherein the base address is used to characterize a storage address of the page table in the physical memory;
the internal storage medium is configured to: when a hardware channel to which the internal storage medium belongs is configured to serve a virtual address space, store hot and cold page access information corresponding to the virtual address space;
the information processing module is configured to:
for any one hardware channel configured to serve a virtual address space, periodically scan a corresponding page table in the physical memory based on a base address of the page table stored in a first register of the any one hardware channel, to obtain hot and cold page access information corresponding to the virtual address space, and write the hot and cold page access information into an internal storage medium of the any one hardware channel; and
each time scanning is completed, provide a channel number for which the scanning is completed to the processor through the channel register, so that the processor performs a hot and cold page processing operation based on hot and cold page access information in an internal storage medium of a hardware channel corresponding to the channel number for which the scanning is completed.

2. The device according to claim 1, wherein the information processing module is further configured to: generate a hot and cold page linked list corresponding to the virtual address space based on the hot and cold page access information in the internal storage medium of the any one hardware channel, and write the hot and cold page linked list into the internal storage medium of the any one hardware channel, so that the processor performs the hot and cold page processing operation based on the hot and cold page access information and/or the hot and cold page linked list in the internal storage medium of the any one hardware channel.

3. The device according to claim 2, wherein the information processing module comprises: a hardware scanning module and a hardware linked list module;
the hardware scanning module is configured to: for any one hardware channel configured to serve a virtual address space, periodically scan the corresponding page table in the physical memory based on the base address of the page table stored in the first register of the any one hardware channel, to obtain the hot and cold page access information corresponding to the virtual address space, and write the hot and cold page access information into the internal storage medium of the any one hardware channel;
the hardware linked list module is configured to: generate the hot and cold page linked list corresponding to the virtual address space based on the hot and cold page access information in the internal storage medium of the any one hardware channel, and write the hot and cold page linked list into the internal storage medium of the any one hardware channel, so that the processor performs the hot and cold page processing operation based on the hot and cold page access information and/or the hot and cold page linked list in the internal storage medium of the any one hardware channel.

4. The device according to claim 3, wherein the hardware linked list module comprises: a reading unit, an adjusting unit, and a writing unit;
the reading unit is configured to: in response to a read trigger operation issued by the hardware scanning module each time scanning is completed, read current hot and cold page access information and a current hot and cold page linked list from the internal storage medium of the any one hardware channel, and provide the current hot and cold page access information and the current hot and cold page linked list to the adjusting unit;
the adjusting unit adjusts an order of page nodes in the current hot and cold page linked list based on the current hot and cold page access information, to obtain an adjusted hot and cold page linked list, and provide the adjusted hot and cold page linked list to the writing unit, wherein each of the page nodes corresponds to a page in the virtual address space;
the writing unit is configured to write the adjusted hot and cold page linked list into the internal storage medium of the any one hardware channel, to replace the hot and cold page linked list before adjustment.

5. The device according to claim 2, wherein the information processing module comprises: a processing unit, and a hardware scanning module implemented based on programmable hardware;
the hardware scanning module is configured to: for any one hardware channel configured to serve a virtual address space, periodically scan the corresponding page table in the physical memory based on the base address of the page table stored in the first register of the any one hardware channel, to obtain the hot and cold page access information corresponding to the virtual address space, and write the hot and cold page access information into the internal storage medium of the any one hardware channel;
the processing unit is configured to execute a built-in linked list maintenance program, to generate the hot and cold page linked list corresponding to the virtual address space based on the hot and cold page access information in the internal storage medium of the any one hardware channel, and write the hot and cold page linked list into the internal storage medium of the any one hardware channel, so that the processor performs the hot and cold page processing operation based on the hot and cold page access information and/or the hot and cold page linked list in the internal storage medium of the any one hardware channel.

6. The device according to any one of claims 2-5, wherein the hardware channel further comprises a second register;
the second register is configured to: when a hardware channel to which the second register belongs is configured to serve a virtual address space, store a scanning period corresponding to the virtual address space;
the information processing module is specifically configured to: read a scanning period from a second register of the any one hardware channel, and periodically scan, according to the scanning period, the corresponding page table in the physical memory based on the base address of the page table stored in the first register of the any one hardware channel, to obtain the hot and cold page access information corresponding to the virtual address space.

7. The device according to claim 2, wherein the hardware channel further comprises: a third register and/or a fourth register;
the third register is configured to: when a hardware channel to which the third register belongs is configured to serve a virtual address space, store a first memory address, wherein the first memory address is used to characterize a memory address in the physical memory for storing hot and cold page access information corresponding to the virtual address space;
the fourth register is configured to: when a hardware channel to which the fourth register belongs is configured to serve a virtual address space, store a second memory address, wherein the second memory address is used to characterize a memory address in the physical memory for storing a hot and cold page linked list corresponding to the virtual address space;
the information processing module is further configured to: read the hot and cold page access information and/or the hot and cold page linked list from the internal storage medium of the hardware channel corresponding to the channel number for which the scanning is completed, and write the hot and cold page access information and/or the hot and cold page linked list into the physical memory based on the first memory address and/or the second memory address, so that the processor performs the hot and cold page processing operation based on the hot and cold page access information and/or the hot and cold page linked list.

8. The device according to any one of claims 1-5, wherein the channel register comprises at least one bit, wherein one bit corresponds to one hardware channel, and the bit is able to be set or cleared;
when providing the channel number for which the scanning is completed to the processor, the information processing module is specifically configured to: each time scanning is completed, set a bit in the channel register corresponding to the hardware channel for which the scanning is completed, and trigger a hardware interrupt to the processor, so that the processor obtains the channel number of the hardware channel corresponding to the set bit from the channel register when receiving the hardware interrupt.

9. A hot and cold page management method, applied to a hot and cold page management acceleration device interconnected between a processor and physical memory of an electronic device; wherein the hot and cold page management acceleration device comprises at least one hardware channel and a channel register, and at least part of the at least one hardware channel comprises a first register and an internal storage medium; wherein the method comprises:
for any one hardware channel configured to serve a virtual address space, periodically scanning a corresponding page table in the physical memory based on a base address of the page table stored in a first register of the any one hardware channel, to obtain hot and cold page access information corresponding to the virtual address space;
writing the hot and cold page access information corresponding to the virtual address space into an internal storage medium of the any one hardware channel; and
each time scanning is completed, providing a channel number for which the scanning is completed to the processor through the channel register, so that the processor performs a hot and cold page processing operation based on hot and cold page access information in an internal storage medium of a hardware channel corresponding to the channel number for which the scanning is completed.

10. A hot and cold page management method, applied to a processor in an electronic device, wherein the method comprises:
receiving a hardware interrupt triggered by a hot and cold page management acceleration device, wherein the hardware interrupt is triggered by the hot and cold page management acceleration device after page table scanning is completed for any one hardware channel, which is configured to serve a virtual address space, in at least one hardware channel comprised in the hot and cold page management acceleration device;
obtaining a channel number for which the scanning is completed from a channel register of the hot and cold page management acceleration device, and obtaining hot and cold page access information and/or a hot and cold page linked list corresponding to the virtual address space from an internal storage medium of the any one hardware channel based on the channel number for which the scanning is completed;
performing a hot and cold page processing operation based on the hot and cold page access information and/or the hot and cold page linked list.

11. A memory management unit, comprising the hot and cold page management acceleration device according to any one of claims 1-8.

12. A processor, comprising the memory management unit according to claim 11.

13. An electronic device, comprising a processor, physical memory, and the hot and cold page management acceleration device according to any one of claims 1-8; or comprising physical memory and the processor according to claim 12.

14. A computer-readable storage medium storing a computer program, wherein when the computer program is executed by a processor, the processor is caused to be able to implement steps in the method according to claim 9 or 10.
